# EUROPEAN PATENT SPECIFICATION

(11) **EP 4 378 699 B1**
(45) Date of publication and mention of the grant of the patent: **12.08.2026**
(21) Application number: 23212057.6
(22) Date of filing: 24.11.2023
(51) Int. Cl.: B41J 11/00, B41J 29/393, G06N 3/084, G06N 5/045

(54) **PRINTING SYSTEM, ADJUSTMENT SUPPORTING METHOD, AND ADJUSTMENT SUPPORTING PROGRAM**
DRUCKSYSTEM, EINSTELLUNGSUNTERSTÜTZUNGSVERFAHREN UND EINSTELLUNGSUNTERSTÜTZUNGSPROGRAMM
SYSTÈME D'IMPRESSION, PROCÉDÉ DE SUPPORT DE RÉGLAGE ET PROGRAMME DE SUPPORT DE RÉGLAGE

(30) Priority: 29.11.2022 JP 2022189825
(43) Date of publication of application: 05.06.2024
(73) Proprietor: SCREEN Holdings Co., Ltd., Kyoto-shi, Kyoto 602-8585 (JP)
(72) Inventor: USUZAKA, Yoshito, Kyoto-shi, 602-8585 (JP); KITAMURA, Kazuhiro, Kyoto-shi, 602-8585 (JP); NAGAI, Kenta, Kyoto-shi, 602-8585 (JP)
(74) Representative: Kilian Kilian & Partner mbB

(56) References cited:
- CN-A- 114 637 476
- US-A1- 2022 138 520
- US-A1- 2022 194 093
- US-A1- 2022 194 099
- US-A1- 2022 197 572
- US-A1- 2022 371 340

## Description

### BACKGROUND OF THE INVENTION

### Field of the Invention

The present invention relates to a printing system including a printing apparatus that performs printing by ejecting ink onto a print medium, and more particularly to adjustment of a value (set value) of a print parameter performed before printing is executed by the printing apparatus.

### Description of Related Art

There has been known an inkjet printing apparatus that performs printing by ejecting ink onto a print medium such as print paper by heat or pressure. The inkjet printing apparatus is provided with a conveyance mechanism that conveys the print medium, a drying mechanism that dries the print medium after printing, and the like in addition to a print head having a large number of nozzles that eject ink onto the print medium. The operation of the components, such as the conveyance mechanism and the drying mechanism, of the inkjet printing apparatus is controlled by values (setting values) of various setting items called print parameters. For example, a "conveyance speed (print speed)" that is a speed at which the conveyance mechanism conveys the print medium, a "drying temperature" that is a temperature at which the drying mechanism dries the print medium after printing, and the like are the print parameters. In general, the value of the print parameter (hereinafter simply referred to as a "parameter value") is set before printing is executed in consideration of the type of print medium, the type of ink used for printing, the amount of ink expected to be used for printing, and the like (i.e., in consideration of a printing condition). By appropriately adjusting the parameter values depending on the printing condition in this manner, various forms of printing can be executed with good quality and at a high speed using the inkjet printing apparatus.

Note that the following related art documents are known in connection with the present invention. JP 2022-73 092 A discloses an invention, which relates to a printing printer system that performs printing processing on a fabric, of an information processing device that outputs recommended values of print parameters (a pre-processing parameter related to pre-processing of a pre-processing device, a drawing processing parameter related to drawing processing of an inkjet printing apparatus, and a post-processing parameter related to post-processing of a post-processing device), using two learned models (a first model and a second model). In the information processing device, first, fabric data indicating the feature amount of the fabric is obtained by the first model on the basis of pre-printing image data. Then, a recommended value of the print parameter is obtained by the second model on the basis of the fabric data and ink data (data indicating the type of ink).

As described above, by appropriately adjusting the parameter values depending on the printing condition, various forms of printing can be executed with good quality and at a high speed using the inkjet printing apparatus. However, generally, parameter values are adjusted on the basis of the experience of an operator, and it thus takes a great deal of time to adjust parameter values when printing is performed on the basis of printing condition that has not been experienced by the operator before. In this regard, the adjustment of the parameter values is repeated until a printed material of sufficient quality is obtained by, for example, test printing. Therefore, the more times adjustments are made, the more ink and print media are wasted. As above, in the past, the need to adjust parameter values may result in loss of time and waste of resources.

According to the invention disclosed in JP 2022-73 092 A, it is necessary to digitize the fabric as an image before the printing processing is performed, thereby leading to large working cost for the operator. Further, in the invention, the data that is inputted to the second model for the purpose of obtaining the recommended value of the print parameter is limited to fabric data indicating the feature amount of the fabric and ink data indicating the type of ink. Thus, even when the invention is applied to an inkjet printing apparatus capable of various settings as the printing condition, there is a high possibility that a suitable recommended value cannot be obtained. Moreover, since the invention requires fabric data, the invention cannot be applied to an inkjet printing apparatus that performs printing on a print medium other than the fabric. Further prior art is known from US 2022/138520 A1 and US 2022/371340 A1. US 2022/138520 A1 discloses an information processing device with an acquisition unit for acquiring image data and ink data, a storage unit for storing derivation data for deriving a recommended parameter for at least one of a pre-processing device and a post-processing device, and a control unit for deriving the recommended parameter from the image data and the ink data, based on the derivation data, wherein the derivation data includes first data and second data, the first data being configured to define a learned model learned by machine learning, the learned model being configured to, when the image data is input, output fabric data indicating a feature value of the fabric, the second data indicating a correspondence relationship between the fabric data and the ink data, and the recommended parameter. US 2022/371340 A1 discloses an image forming apparatus with a first heater that heats a recording medium and includes a front surface heater and a back surface heater, a control part that controls the first heater and individually controls a temperature of the front surface heater and a temperature of the back surface heater when the recording medium has a multilayer structure.

### SUMMARY OF THE INVENTION

Therefore, an object of the present invention is to enable an operator to appropriately and easily adjust a parameter value in an inkjet printing apparatus regardless of work experience. This object is achieved by the subject-matters of the independent claims. The invention is defined by the independent claims 1, 13 and 14. Preferred embodiments are the subject-matters of the dependent claims. Aspects of the invention are set out below.

One aspect of the present invention is directed to a printing system that includes a printing apparatus (10) provided with a conveyance mechanism (129) configured to convey a print medium, a conveyance controller (111) configured to control a conveyance speed at which the conveyance mechanism (129) conveys the print medium, a printing unit (124) configured to perform printing by ejecting ink onto the print medium being conveyed by the conveyance mechanism (129), a drying mechanism (125) configured to dry the print medium after printing by the printing unit (124), and a drying controller (113) configured to control a drying temperature at which the drying mechanism

(125) dries the print medium, the printing system including:
a printing condition input reception unit (115) configured to receive an input of a printing condition; and
a recommended value output unit (116) configured to output a plurality of recommended values for at least one of a conveyance speed and a drying temperature as a print parameter on a basis of an input printing condition that is a printing condition received by the printing condition input reception unit (115),
wherein the recommended value output unit (116) includes
   a recommended candidate value search model (61) learned by machine learning, the recommended candidate value search model being configured to obtain a plurality of recommended candidate values that are candidates for the plurality of recommended values on a basis of the input printing condition, and
   a recommended candidate value evaluation unit (1161) configured to select output targets as the plurality of recommended values from the plurality of recommended candidate values by evaluating each of the plurality of recommended candidate values.

With such a configuration, a plurality of recommended candidate values that are candidates for recommended values of a print parameter are obtained on the basis of the input printing condition by the recommended candidate value search model learned by machine learning. The plurality of recommended candidate values are evaluated by the recommended candidate value evaluation unit, and a plurality of recommended values are outputted on the basis of the evaluation result. The candidates for the recommended values of the print parameter are obtained by the recommended candidate value search model learned by machine learning as described above, so that the parameter value can be easily adjusted compared to the related art. In addition, since each recommended candidate value is evaluated, only appropriate parameter values can be presented as the recommended values. From the above, the operator can appropriately and easily adjust a parameter value in the printing apparatus, regardless of work experience.

Another aspect of the present invention is directed to an adjustment supporting method for supporting adjustment of a value of a print parameter in a printing apparatus (10) provided with a conveyance mechanism (129) configured to convey a print medium, a conveyance controller (111) configured to control a conveyance speed at which the conveyance mechanism (129) conveys the print medium, a printing unit (124) configured to perform printing by ejecting ink onto the print medium being conveyed by the conveyance mechanism (129), a drying mechanism (125) configured to dry the print medium after printing by the printing unit (124), and a drying controller (113) configured to control a drying temperature at which the drying mechanism

(125) dries the print medium, the adjustment supporting method including:
a printing condition input step (S40) of inputting, by an operator, a printing condition; and
a recommended value output step (S50, S60, and S70) of outputting, by a computer, a plurality of recommended values for at least one of a conveyance speed and a drying temperature as a print parameter on a basis of an input printing condition that is a printing condition inputted in the printing condition input step (S40),
wherein the recommended value output step (S50, S60, and S70) includes
   a recommended candidate value search step (S50) of obtaining a plurality of recommended candidate values that are candidates for the plurality of recommended values on a basis of the input printing condition, using a recommended candidate value search model learned by machine learning, and
   a recommended candidate value evaluation step (S60) of selecting output targets as the plurality of recommended values from the plurality of recommended candidate values by evaluating each of the plurality of recommended candidate values.

Still another aspect of the present invention is directed to an adjustment supporting program for supporting adjustment of a value of a print parameter in a printing apparatus (10) provided with a conveyance mechanism (129) configured to convey a print medium, a conveyance controller (111) configured to control a conveyance speed at which the conveyance mechanism (129) conveys the print medium, a printing unit (124) configured to perform printing by ejecting ink onto the print medium being conveyed by the conveyance mechanism (129), a drying mechanism (125) configured to dry the print medium after printing by the printing unit (124), and a drying controller (113) configured to control a drying temperature at which the drying mechanism

(125) dries the print medium, wherein the adjustment supporting program causes a computer included in the printing apparatus (10) to execute:
a printing condition input reception step (S40) of receiving an input of a printing condition; and
a recommended value output step (S50, S60, and S70) of outputting a plurality of recommended values for at least one of a conveyance speed and a drying temperature as a print parameter on a basis of an input printing condition that is a printing condition received in the printing condition input reception step,
wherein the recommended value output step (S50, S60, and S70) includes
   a recommended candidate value search step (S50) of obtaining a plurality of recommended candidate values that are candidates for the plurality of recommended values on a basis of the input printing condition, using a recommended candidate value search model learned by machine learning, and
   a recommended candidate value evaluation step (S60) of selecting output targets as the plurality of recommended values from the plurality of recommended candidate values by evaluating each of the plurality of recommended candidate values.

These and other objects, features, modes, and advantageous effects of the present invention will become more apparent from the following detailed description of the present invention with reference to the accompanying drawings.

### BRIEF DESCRIPTION OF THE DRAWINGS

Fig. 1 is a block diagram showing an overall configuration of a printing system according to one embodiment of the present invention;
Fig. 2 is a schematic diagram showing a configuration of an inkjet printing apparatus in the embodiment;
Fig. 3 is a schematic diagram showing another example of the configuration of the inkjet printing apparatus in the embodiment;
Fig. 4 is a diagram showing a first configuration example of a drying mechanism in the embodiment;
Fig. 5 is a diagram showing a second configuration example of the drying mechanism in the embodiment;
Fig. 6 is a diagram showing a third configuration example of the drying mechanism in the embodiment;
Fig. 7 is a diagram showing a fourth configuration example of the drying mechanism in the embodiment;
Fig. 8 is a block diagram showing a configuration for controlling the printing mechanism in the embodiment;
Fig. 9 is a block diagram showing a configuration of a computer included in the printing system in the embodiment;
Fig. 10 is a diagram for describing an explanatory variable and an objective variable in the embodiment;
Fig. 11 is a block diagram showing a functional configuration for realizing parameter value adjustment support processing in the embodiment;
Fig. 12 is a diagram showing an example of a print result log in the embodiment;
Fig. 13 is a diagram showing an example of a record format of the print result log in the embodiment;
Fig. 14 is a flowchart showing a schematic procedure for the parameter value adjustment support processing in the embodiment;
Fig. 15 is a flowchart showing a detailed procedure for print result aggregation processing in the embodiment;
Fig. 16 is a diagram for describing a process of digitizing the print result log in the embodiment;
Fig. 17 is a diagram schematically showing a flow of parameter value adjustment;
Fig. 18 is a diagram schematically showing print result logs corresponding to the flow of the parameter value adjustment shown in Fig. 17;
Fig. 19 is a diagram showing an example of a weight matrix when the total number of explanatory variable value sets is 6 and the total number of objective variable value sets is 5 in the embodiment;
Fig. 20 is a diagram for describing the generation of a weight matrix in the embodiment;
Fig. 21 is a diagram showing an example of a weight matrix including a component value of 2 or more in the embodiment;
Fig. 22 is a flowchart showing a detailed procedure for recommended candidate value search processing in the embodiment;
Fig. 23 is a diagram for describing filtering of aggregated print result data in the embodiment;
Fig. 24 is a diagram for describing the filtering of the aggregated print result data in the embodiment;
Fig. 25 is a diagram for describing the filtering of the aggregated print result data in the embodiment;
Fig. 26 is a diagram for describing the filtering of the aggregated print result data in the embodiment;
Fig. 27 is a diagram for describing obtainment of a similar explanatory variable value set using a neighborhood method in the embodiment;
Fig. 28 is a diagram for describing the obtainment of the similar explanatory variable value set using clustering in the embodiment;
Fig. 29 is a diagram for describing calculation of a relevance degree between the similar explanatory variable value set and an extracted objective variable value set in the embodiment;
Fig. 30 is a flowchart showing a detailed procedure for recommended candidate value evaluation processing in the embodiment;
Fig. 31 is a diagram showing an example of a message screen indicating that the recommended value could not be obtained in the embodiment;
Fig. 32 is a diagram showing an example of a recommended value information display screen in the embodiment;
Fig. 33 is a flowchart for describing a flow of print execution in the embodiment;
Fig. 34 is a diagram for describing the effect of the embodiment;
Fig. 35 is a diagram for describing the effect of the embodiment;
Fig. 36 is a block diagram showing a functional configuration for realizing parameter value adjustment support processing in the first modification of the embodiment;
Fig. 37 is a flowchart showing a schematic procedure for the parameter value adjustment support processing in the first modification of the embodiment;
Fig. 38 is a diagram showing an example of a structure of a neural network provided in a recommended candidate value evaluation unit in a second modification of the embodiment;
Fig. 39 is a diagram for describing data provided to the input layer of the neural network in the second modification of the embodiment; and
Fig. 40 is a diagram showing an example of a recommended value information display screen in the second modification of the embodiment.

### DETAILED DESCRIPTION OF PREFERRED EMBODIMENT

Hereinafter, an embodiment of the present invention will be described with reference to the accompanying drawings.

### <1. Overall configuration of printing system>

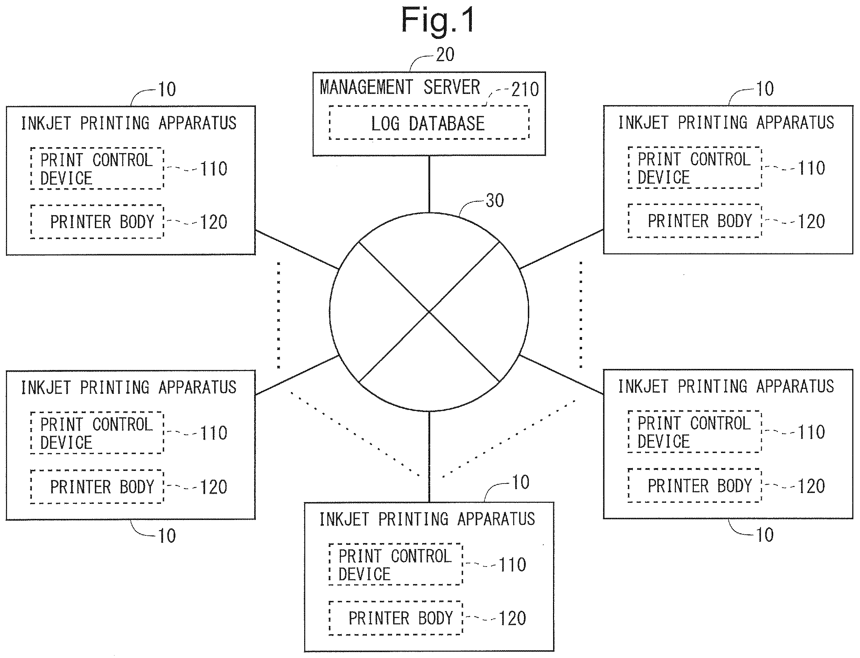

Fig. 1 is a block diagram showing an overall configuration of a printing system according to one embodiment of the present invention. The printing system includes a plurality of inkjet printing apparatuses 10 and a management server 20. Each inkjet printing apparatus 10 and the management server 20 are connected via a communication line 30 such as the Internet. The inkjet printing apparatus 10 is installed in a printing company, for example. A plurality of inkjet printing apparatuses 10 may be installed in the printing company.

The inkjet printing apparatus 10 includes a printer body 120 and a print control device 110 that controls the operation of the printer body 120. The inkjet printing apparatus 10 outputs a printed image (i.e., performs printing) by ejecting ink onto print paper as a print medium without using a printing plate on the basis of printed data generated by the raster image processor (RIP) process. Note that the RIP process is executed by a personal computer connected to the inkjet printing apparatus 10 via a local-area network (LAN), for example. When printing is performed by the inkjet printing apparatus 10, a print result log indicating a print execution status is outputted.

The management server 20 is a device installed by the manufacturer of the inkjet printing apparatus 10 to monitor the operational status of each inkjet printing apparatus 10. The above-described print result log outputted from each inkjet printing apparatus 10 is transmitted to the management server 20. The management server 20 includes a log database 210 that stores the print result log, and print result logs transmitted from the plurality of inkjet printing apparatuses 10 connected to the management server 20 are accumulated in the log database 210.

Meanwhile, the printing system according to the present embodiment is provided with a function of supporting adjustment of a parameter value by an operator. In the present specification, processing for realizing the function is referred to as "parameter value adjustment support processing". The parameter value adjustment support processing is processing of presenting recommended values of a print parameter depending on an input printing condition so that a high-quality printed material can be obtained. As a part of the parameter value adjustment support processing, the management server 20 performs processing of constructing a machine learning model (hereinafter referred to as a "recommended candidate value search model") that obtains candidates for the recommended values of the print parameter depending on the printing condition by using data obtained by aggregating print results in the plurality of inkjet printing apparatuses 10 on the basis of the print result logs accumulated in the log database 210 as teacher data. The learned recommended candidate value search model constructed by the management server 20 is transmitted from the management server 20 to each of the plurality of inkjet printing apparatuses 10. As another part of the parameter value adjustment support processing, each inkjet printing apparatus 10 performs processing of outputting the recommended values of the print parameter on the basis of the printing condition inputted by the operator, using the recommended candidate value search model transmitted from the management server 20. As above, the recommended values of the print parameter are presented to the operator by the parameter value adjustment support processing, using the technology of artificial intelligence (AI).

### <2. Configuration of inkjet printing apparatus>

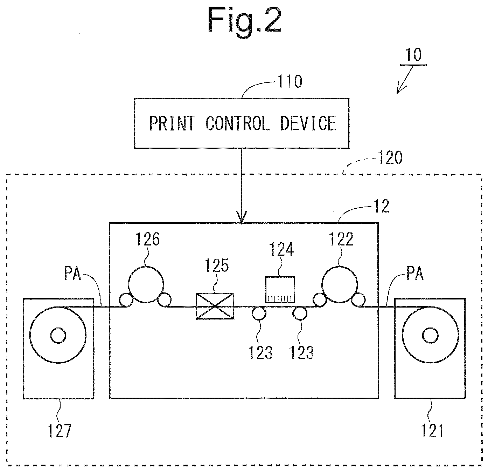

Fig. 2 is a schematic diagram showing a configuration of an inkjet printing apparatus 10 in the present embodiment. As described above, the inkjet printing apparatus 10 includes the printer body 120 and the print control device 110 that is a controller of the printer body.

The printer body 120 includes a paper feeding unit 121 that supplies print paper (e.g., roll paper) PA, a printing mechanism 12 that performs printing on the print paper PA, and a paper winding unit 127 that winds the print paper PA after printing. The printing mechanism 12 includes a first drive roller 122 for conveying the print paper PA to the inside, a plurality of supporting rollers 123 that conveys the print paper PA inside the printing mechanism 12, a printing unit 124 that performs printing by ejecting ink onto the print paper PA, a drying mechanism 125 that dries the print paper PA after printing, and a second drive roller 126 for outputting the print paper PA from the inside of the printing mechanism 12. The printing unit 124 includes, for example, four print heads that eject inks of cyan (C), magenta (M), yellow (Y), and black (K). Each print head includes, for example, a plurality of head modules arranged in a staggered manner. Each head module includes a large number of nozzles that eject ink. Note that there is also an inkjet printing apparatus in which an imaging unit (e.g., contact image sensor (CIS)) that captures a printed image (print paper PA after printing) is provided inside the printing mechanism 12 to inspect whether printing has been performed correctly. The print control device 110 controls the operation of the printer body 120 configured as described above.

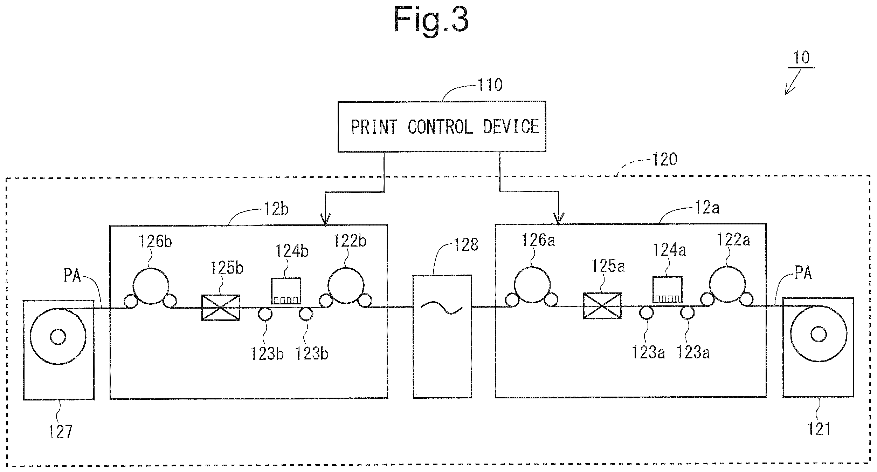

Although Fig. 2 shows the configuration of the inkjet printing apparatus 10 that performs printing only on one surface of the print paper PA, the present invention can also be applied to a case where an inkjet printing apparatus 10 that includes a printing mechanism 12a for front-side printing and a printing mechanism 12b for back-side printing as shown in Fig. 3 is adopted. In the inkjet printing apparatus 10 shown in Fig. 3, a reversing unit 128 that reverses the front side and the back side of the print paper PA is provided between the printing mechanism 12a for front-side printing and the printing mechanism 12b for back-side printing. In Fig. 3, "a" is added to the end of reference numeral for components included in the printing mechanism 12a for front-side printing, and "b" is added to the end of reference numeral for components included in the printing mechanism 12b for back-side printing.

Meanwhile, various configurations can also be adopted for the drying mechanism 125. Therefore, four examples of the configuration of the drying mechanism 125 will be described below.

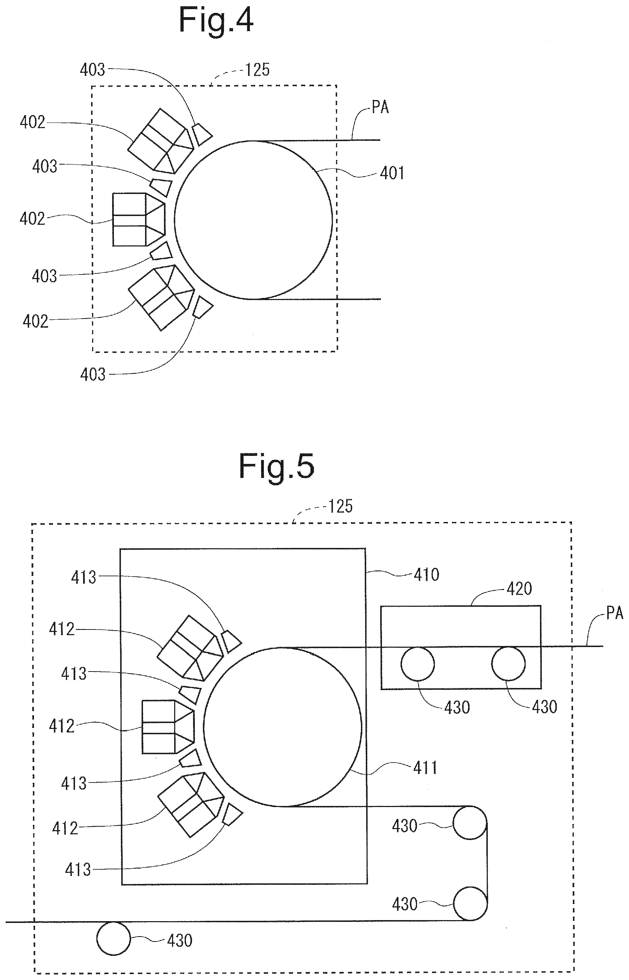

Fig. 4 is a diagram showing a configuration of a drying mechanism 125 in a first example. The drying mechanism 125 in the first example includes a heat roller 401, a plurality of warm-air-blowing unit 402, and a plurality of collection units 403. The heat roller 401 includes a heat source such as a halogen heater therein, and the print control device 110 drives and controls the heat source. Thereby, the heat roller 401 is heated to a preset temperature. The print paper PA is conveyed while being wound around the heat roller 401 heated as described above. The warm-air-blowing unit 402 blows air (warm air) heated by the built-in heat source onto the print paper PA. The heat source built in the warm-air-blowing unit 402 is also driven and controlled by the print control device 110 so that the temperature of the air blown onto the print paper PA becomes a preset temperature. The collection unit 403 collects the air blown onto the print paper PA from the warm-air-blowing unit 402. As above, in the first example, the print paper PA is dried by the heat roller 401 and the warm-air-blowing unit 402.

Fig. 5 is a diagram showing a configuration of a drying mechanism 125 in a second example. The drying mechanism 125 in the second example includes: a drying unit 410 including a heat roller 411, a plurality of warm-air-blowing units 412, and a plurality of collection units 413; and a preheating unit 420 disposed upstream of the drying unit 410. Note that the drying mechanism 125 also includes a plurality of conveyance rollers 430. The heat roller 411, the warm-air-blowing unit 412, and the collection unit 413 are similar to the heat roller 401, the warm-air-blowing unit 402, and the collection unit 403 in the first example. The preheating unit 420 supplies the air collected by the collection unit 413 to the periphery of the conveyance path of the print paper PA. This preheats the print paper PA. As above, in the second example, the print paper PA is dried by the preheating unit 420, the heat roller 411, and the warm-air-blowing unit 412.

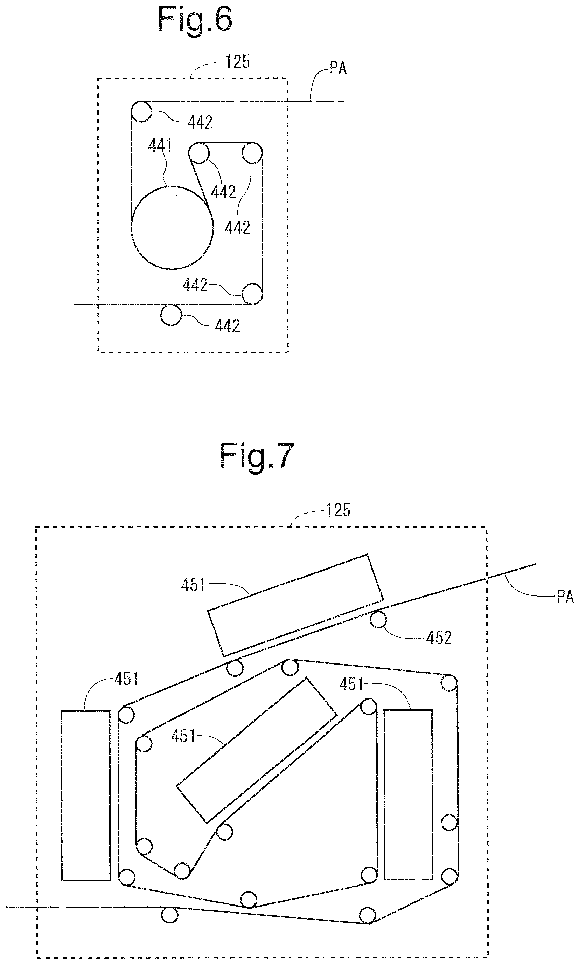

Fig. 6 is a diagram showing a configuration of a drying mechanism 125 in a third example. The drying mechanism 125 in the third example includes one heat roller 441 and a plurality of conveyance rollers 442. In the third example, the print paper PA is dried only by the heat roller 441.

Fig. 7 is a diagram showing a configuration of a drying mechanism 125 in a fourth example. The drying mechanism 125 in the fourth example includes a plurality of heating units 451 and a plurality of conveyance rollers 452. The heating unit 451 includes a plurality of carbon heaters that emit infrared rays, and a temperature at which the heating unit 451 dries the print paper PA is controlled by the print control device 110. As above, in the fourth example, the print paper PA is dried by the plurality of heating units 451 constituted by the carbon heaters.

As examples other than the first to fourth examples, a drying mechanism including a drying unit that emits near-infrared rays (NIR) in addition to a heat roller and a warm-air-blowing unit, a drying mechanism including one large-sized heat roller and a plurality of small-sized heat rollers, and the like are known.

Various configurations are conceivable for the drying mechanism 125 as described above, but in the following description, it is assumed that the configuration of the first example (cf. Fig. 4) is adopted unless otherwise specified. That is, as print parameters for controlling the operation of the drying mechanism 125, the temperature of the heat roller 401 (hereinafter referred to as "HR temperature") and the temperature of the air (warm air) sent out from the warm-air-blowing unit 402 (hereinafter referred to as "warm air temperature") are prepared. In this regard, the heat roller 401 corresponds to a first drying mechanism, the HR temperature corresponds to a first drying temperature, the warm-air-blowing unit 402 corresponds to a second drying mechanism, and the warm air temperature corresponds to a second drying temperature.

It goes without saying that the number of print parameters for controlling the operation of the drying mechanism 125 is appropriately increased or decreased according to the physical configuration of the drying mechanism 125. For example, since the drying mechanism 125 of the configuration of the first example (cf. Fig. 4) includes the heat roller 401 and the warm-air-blowing unit 402, the number of print parameters in the drying mechanism 125 is two: the HR temperature and the warm air temperature. In contrast, since the drying mechanism 125 of the configuration of the second example (cf. Fig. 5) includes the heat roller 411, the warm-air-blowing unit 412, and the preheating unit 420, the number of print parameters in the drying mechanism 125 is three: the HR temperature, the warm air temperature of the warm-air-blowing unit 412, and the warm air temperature of the preheating unit 420.

### <3. Configuration for controlling printing mechanism>

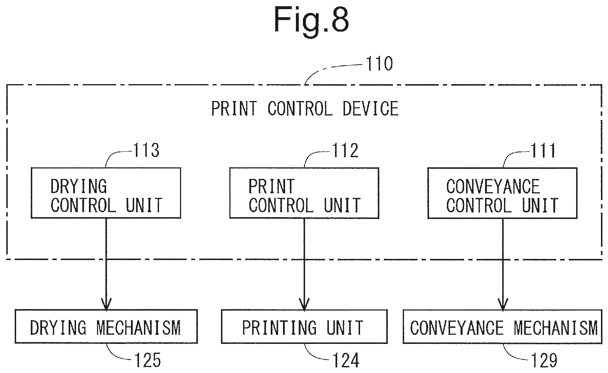

Fig. 8 is a block diagram showing a configuration for controlling the printing mechanism 12. The printing mechanism 12 is controlled by the print control device 110. The print control device 110 includes a conveyance control unit 111, a print control unit 112, and a drying control unit 113 as components for controlling the printing mechanism 12. Note that Fig. 8 shows only components related to the present invention.

The conveyance control unit 111 controls the speed (conveyance speed) at which a conveyance mechanism 129 conveys the print paper PA. In the present embodiment, the conveyance mechanism 129 is realized by the paper feeding unit 121, the first drive roller 122, the plurality of supporting rollers 123, the second drive roller 126, and the paper winding unit 127 (cf. Fig. 2). The print control unit 112 controls the ejection of the ink from each of the nozzles included in the respective print heads constituting the printing unit 124. For example, ink ejection timing and ink ejection amount are controlled. The drying control unit 113 controls the temperatures (HR temperature and warm air temperature) at which the drying mechanism 125 dries the print paper PA.

### <4. Configuration of computer constituting printing system>

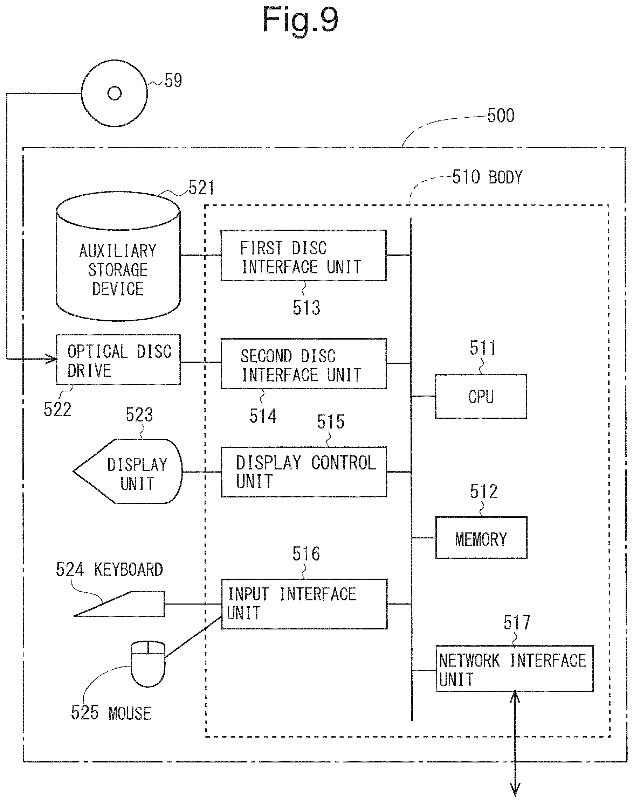

Fig. 9 is a block diagram showing a configuration of a computer 500 included in the printing system according to the present embodiment. The management server 20 and the print control device 110 are computers 500. The computer 500 shown in Fig. 9 includes a body 510, an auxiliary storage device 521, an optical disc drive 522, a display unit 523, a keyboard 524, a mouse 525, and the like. The body 510 includes a central processing unit (CPU) 511, a memory 512, a first disc interface unit 513, a second disc interface unit 514, a display control unit 515, an input interface unit 516, and a network interface unit 517. The CPU 511, the memory 512, the first disc interface unit 513, the second disc interface unit 514, the display control unit 515, the input interface unit 516, and the network interface unit 517 are connected to each other via a system bus. The auxiliary storage device 521 is connected to the first disc interface unit 513. The auxiliary storage device 521 is a magnetic disk device or the like. The optical disc drive 522 is connected to the second disc interface unit 514. An optical disc 59 as a computer-readable recording medium such as a compact disc read-only memory (CD-ROM) or a digital versatile disc (DVD)-ROM is inserted into the optical disc drive 522. The display unit (display device) 523 is connected to the display control unit 515. The display unit 523 is a liquid crystal display or the like. The display unit 523 is used to display information desired by the operator. The keyboard 524 and the mouse 525 are connected to the input interface unit 516. The keyboard 524 and the mouse 525 are used by the operator to input instructions to the computer 500. The network interface unit 517 is an interface circuit for communication.

The auxiliary storage device 521 stores programs to be executed by the computer 500 and various data. In the present embodiment, an adjustment support program for realizing parameter value adjustment support processing is stored in the auxiliary storage device 521 of the print control device 110. The auxiliary storage device 521 of the management server 20 includes the log database 210. The CPU 511 reads a program stored in the auxiliary storage device 521 into the memory 512 and executes the program to achieve various functions. The memory 512 includes random access memory (RAM) and read-only memory (ROM). The memory 512 functions as a work area for the CPU 511 to execute the program stored in the auxiliary storage device 521. Note that the program is provided by being stored into the computer-readable recording medium (non-transitory recording medium), for example.

### <5. Parameter value adjustment support processing>

The parameter value adjustment support processing will be described below.

### <5.1 Outline and description of terms>

First, the outline of the parameter value adjustment support processing and terms used in the present specification will be described. In the field of statistical processing such as multivariate analysis, a data item corresponding to cause is called an "explanatory variable", and a data item representing a result is called an "objective variable". In the parameter value adjustment support processing in the present embodiment, a condition item that is a data item related to the printing condition or a data item newly generated from the value of one or a plurality of condition items is treated as an explanatory variable, and a print parameter is treated as an objective variable. In a case where only one print parameter is treated as the objective variable, a plurality of recommended values for the print parameter is presented on the basis of a combination of a plurality of explanatory variable values corresponding to the printing condition inputted by the operator. In a case where a plurality of print parameters are treated as objective variables, a plurality of recommended value sets, which are combinations of recommended values for the plurality of print parameters, are presented on the basis of a combination of a plurality of explanatory variable values corresponding to the printing condition inputted by the operator.

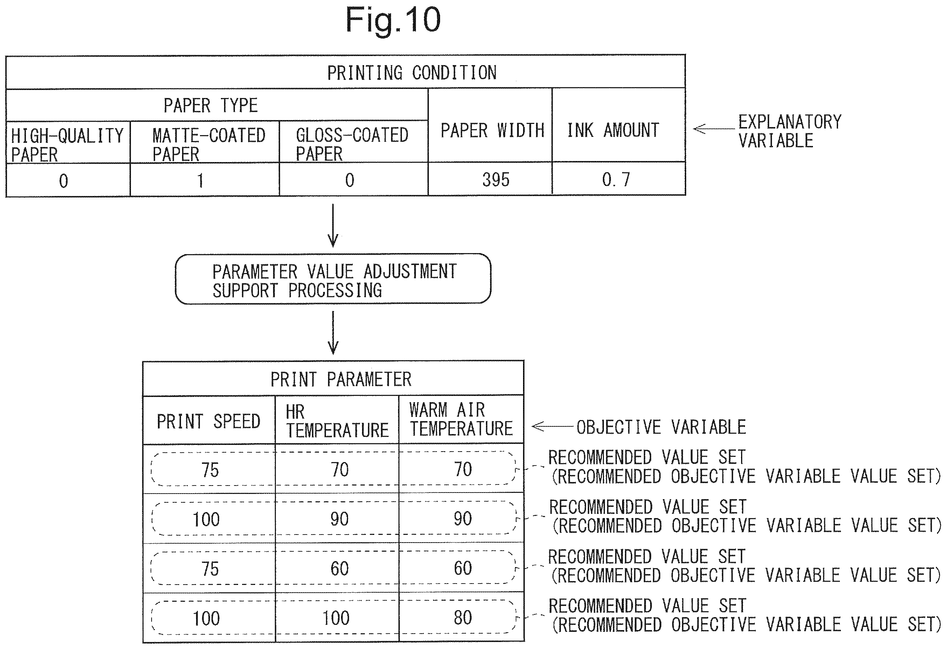

In the following example, as shown in Fig. 10, the paper type (more specifically, the value of the print parameter indicating the paper type), the paper width, and the ink amount are treated as explanatory variables, and the print speed (conveyance speed), the HR temperature, and the warm air temperature are treated as objective variables (the print parameter indicating the type of paper is not a print parameter treated as an objective variable). Then, a plurality of "combinations of the recommended value of the print speed (conveyance speed), the recommended value of the HR temperature, and the recommended value of the warm air temperature" are presented on the basis of a "combination of the value of the paper type, the value of the paper width, and the value of the ink amount" corresponding to the printing condition.

In the present specification, a combination of values of a plurality of data items treated as explanatory variables is referred to as an "explanatory variable value set", and a value of one print parameter treated as an objective variable or a combination of values of a plurality of print parameters treated as objective variables is referred to as an "objective variable value set". In the example shown in Fig. 10, a combination of the value of the paper type, the value of the paper width, and the value of the ink amount is an explanatory variable value set, and a combination of the value of the print speed, the value of the HR temperature, and the value of the warm air temperature is an objective variable value set. An objective variable value set recommended by the parameter value adjustment support processing is referred to as a "recommended objective variable value set", and an objective variable value set that is a candidate for the recommended objective variable value set in the process of obtaining the recommended objective variable value set is referred to as a "recommended candidate objective variable value set".

### <5.2 Configuration for realizing parameter value adjustment support processing>

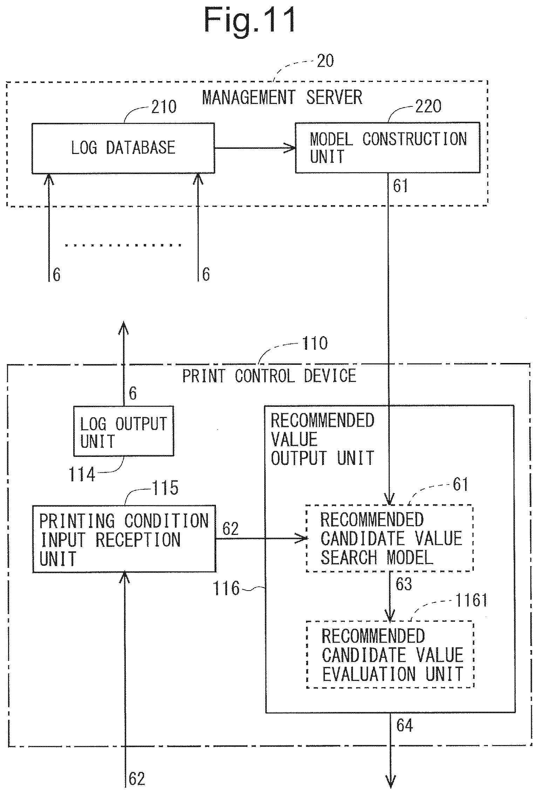

Fig. 11 is a block diagram showing a functional configuration for realizing the parameter value adjustment support processing. As components for realizing the parameter value adjustment support processing, the management server 20 is provided with the log database 210 and a model construction unit 220, and the print control device 110 is provided with a log output unit 114, a printing condition input reception unit 115, and a recommended value output unit 116. The recommended value output unit 116 includes a recommended candidate value search model 61 and a recommended candidate value evaluation unit 1161.

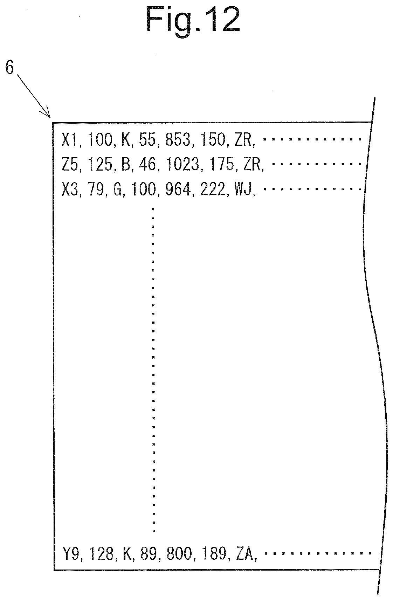

The log output unit 114 outputs a print result log 6 described above that indicates the execution status of printing after execution of printing by the inkjet printing apparatus 10. Fig. 12 is a diagram showing an example of the print result log 6. In this example, the print result log 6 is data in the comma-separated value (CSV) format. However, the format of the data of the print result log 6 is not particularly limited. In each inkjet printing apparatus 10, every time printing is executed, the print result log 6 indicating the execution status is outputted by the log output unit 114 as a one-line record. The transmission of the print result log 6 from each inkjet printing apparatus 10 to the management server 20 is performed according to a predetermined rule. Regarding this, for example, the following rules can be considered: "transmit the print result log 6 from the inkjet printing apparatus 10 to the management server 20 at 0 o'clock am each day", and "transmit the print result logs 6 from the inkjet printing apparatus 10 to the management server 20 every time the number of records of the print result logs 6 reaches 100 records". Note that a record (e.g., a record indicating information regarding the RIP process) other than the record indicating the execution status of printing may be included in the log outputted from the log output unit 114. In this case, only the record indicating the execution status of printing may be extracted, and a log including only the extracted record may be used for the parameter value adjustment support processing as the print result log 6.

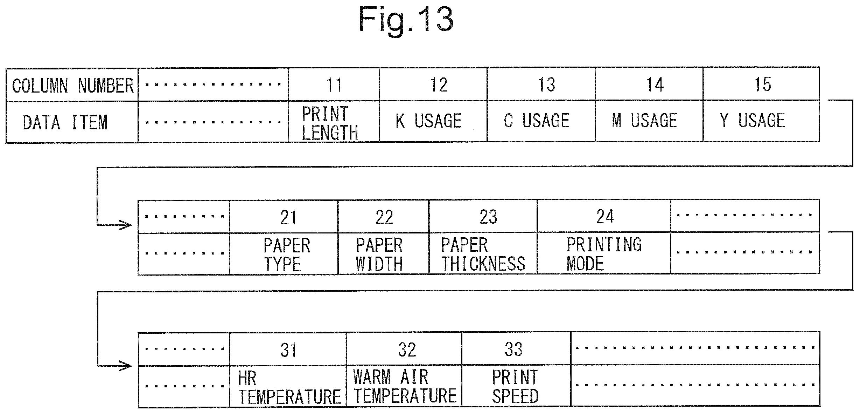

Fig. 13 is a diagram showing an example of the record format of the print result log 6. The data items constituting the record of the print result log 6 include a condition item that is a data item related to a printing condition and a print parameter that is a data item whose value can be adjusted. In the example shown in Fig. 13, data items with column numbers 11 to 15 and 21 to 24 are condition items, and data items with column numbers 31 to 33 are print parameters. Note that the K usage, C usage, M usage, and Y usage refer to the amounts of black (K), cyan (C), magenta (M), and yellow (Y) inks used, respectively. As described above, the print result log 6 includes the value of the condition item related to the printing condition and the parameter value (the value of the print parameter).

The log database 210 stores the print result log 6 transmitted from each inkjet printing apparatus 10. Since the print result log 6 is transmitted from each of the plurality of inkjet printing apparatuses 10 to the management server 20, a large number of print result logs 6 is accumulated in the log database 210.

The model construction unit 220 performs learning using data obtained on the basis of the print result logs 6 accumulated in the log database 210 as teacher data, thereby constructing a recommended candidate value search model 61 configured to obtain candidates for recommended values of a print parameter on the basis of the printing condition 62 inputted by the operator. Note that the recommended candidate value search model 61 constructed by the model construction unit 220 includes aggregated print result data including information on the appearance frequency for each combination of the explanatory variable value set and the objective variable value set. The recommended candidate value search model 61 constructed by the management server 20 is transmitted to each inkjet printing apparatus 10. The recommended candidate value search model 61 transmitted to the inkjet printing apparatus 10 becomes a component of the recommended value output unit 116.

The printing condition input reception unit 115 displays a screen for inputting the printing condition 62 on the display unit 523, and receives the input of the printing condition 62 by the operator.

The recommended candidate value search model 61 in the recommended value output unit 116 obtains a plurality of candidates (recommended candidate values 63) for the recommended values of the print parameter on the basis of the printing condition 62 received by the printing condition input reception unit 115. More specifically, the recommended candidate value search model 61 obtains a plurality of recommended candidate objective variable value sets, which are candidates for the plurality of recommended objective variable value sets, on the basis of the printing condition 62 received by the printing condition input reception unit 115 and the aggregated print result data described above.

The recommended candidate value evaluation unit 1161 in the recommended value output unit 116 evaluates each of the plurality of recommended candidate values 63 obtained by the recommended candidate value search model 61 to select actual output targets as a plurality of recommended values from the plurality of recommended candidate values 63. More specifically, the recommended candidate value evaluation unit 1161 evaluates each of a plurality of recommended candidate objective variable value sets obtained by the recommended candidate value search model 61 to select actual output targets as a plurality of recommended objective variable value sets (a plurality of recommended value sets) from the plurality of recommended candidate objective variable value sets.

From the above, the recommended value output unit 116 outputs a plurality of recommended values 64 (a plurality of recommended value sets) on the basis of the printing condition 62 received by the printing condition input reception unit 115. Meanwhile, the print parameters treated as the objective variable include at least one of the conveyance speed and the drying temperature. Therefore, the recommended value output unit 116 outputs a plurality of recommended values 64 for at least one of the conveyance speed and the drying temperature as print parameters.

### <5.3 Procedure>

### <5.3.1 Schematic procedure>

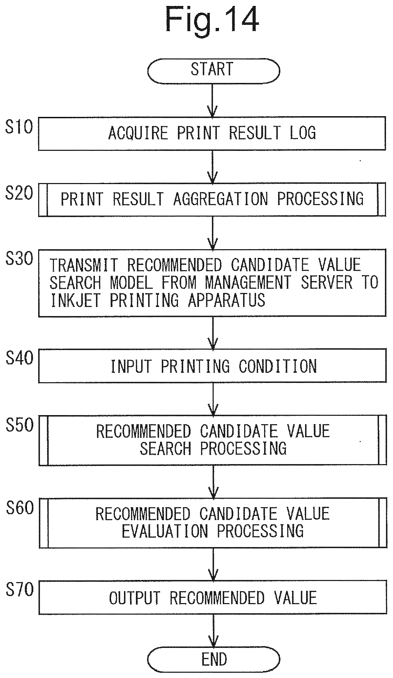

Fig. 14 is a flowchart showing a schematic procedure for the parameter value adjustment support processing. First, the management server 20 acquires the print result log 6 transmitted from each inkjet printing apparatus 10 (step S10). The print result log 6 is stored into the log database 210. Next, the management server 20 performs print result aggregation processing of aggregating print results in the plurality of inkjet printing apparatuses 10 on the basis of the print result logs 6 accumulated in the log database 210 (step S20). By the print result aggregation processing, the recommended candidate value search model 61 described above is constructed. Note that the print result aggregation processing will be described in detail later. After completion of the print result aggregation processing, the management server 20 transmits the recommended candidate value search model 61 to each inkjet printing apparatus 10 (step S30).

In a state where the learned recommended candidate value search model 61 transmitted from the management server 20 is held in the print control device 110, a printing condition is inputted by the operator (S40). Then, recommended candidate value search processing of obtaining a plurality of recommended candidate values 63, which are candidates for the plurality of recommended values 64 for the print parameter, using the recommended candidate value search model 61 on the basis of the printing condition inputted in step S40 (hereinafter referred to as "input printing condition") is performed (step S50). In this regard, since the recommended candidate value search model 61 is a model learned by machine learning, a plurality of recommended candidate values 63 are obtained using a technique of artificial intelligence (AI) in step S50. Thereafter, recommended candidate value evaluation processing of evaluating each of the plurality of recommended candidate values 63 in order to select actual output targets from the plurality of recommended candidate values 63 is performed (step S60). Then, on the basis of the result of the recommended candidate value evaluation processing, the output of the recommended values 64 of the print parameter (the output of a plurality of recommended objective variable value sets) is performed (step S70). Note that the recommended candidate value search processing and the recommended candidate value evaluation processing will be described in detail later.

Meanwhile, the processing in the inkjet printing apparatus 10 and the processing in the management server 20 are performed independently of each other. Therefore, when the learned recommended candidate value search model 61 has been transmitted from the management server 20 to the inkjet printing apparatus 10 even once, the inkjet printing apparatus 10 can perform the processing of step S40 and subsequent steps at any timing.

In the present embodiment, a printing condition input step and a printing condition input reception step are realized by step S40, and a recommended value output step is realized by step S50, step S60, and step S70. In addition, a recommended candidate value search step is realized in step S50, and a recommended candidate value evaluation step is realized in step S60.

### <5.3.2 Print result aggregation processing>

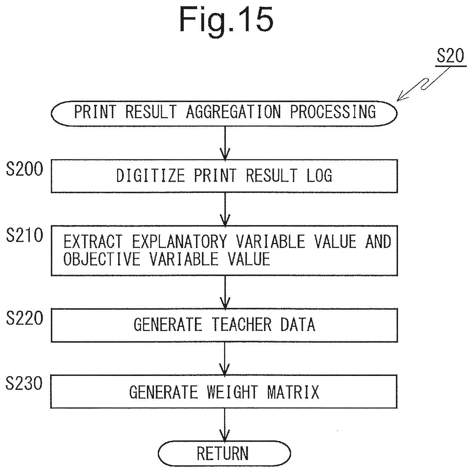

Fig. 15 is a flowchart showing a detailed procedure for the print result aggregation processing. The print result aggregation processing is performed by the management server 20. After the start of the print result aggregation processing, first, a process of digitizing the print result log 6 is performed (step S200). In this regard, the print result log 6 includes numerical data such as paper width information and print speed information, and character string data such as paper type information and printing mode information. The numerical data can be used as it is for the following processes, but the character string data needs to be converted to numerical data for use in the following processes. Therefore, in step S200, a process of converting the character string data to numerical data is performed. For the conversion from the character string data to the numerical data, a method called one-hot encoding, a method using an order feature amount, or the like is adopted.

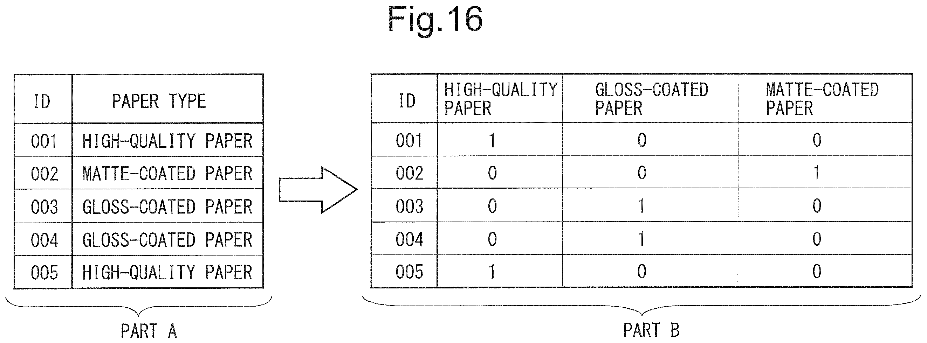

For example, in this printing system, it is assumed that there are three options of "high-quality paper", "matte-coated paper", and "gloss-coated paper" regarding the paper type. In this case, numerical data (binary data) that takes 1 or 0 is assigned to each of the three options. That is, three pieces of numerical data (binary data) for specifying the paper type are provided for each record of the print result log 6. Here, it is assumed that paper types of five records with identifications (IDs) 001 to 005 are as shown in part A of Fig. 16. At this time, the conversion from the character string data to the numerical data is performed on the paper type data, so that the data for specifying the paper type of the five records is as shown in part B of Fig. 16. For example, focusing on a record with ID 003, since its paper type is gloss-coated paper, after the conversion from the character string data to the numerical data, only the numerical data corresponding to the gloss-coated paper is 1, and the numerical data corresponding to the high-quality paper and the numerical data corresponding to the matte-coated paper are 0.

It is assumed that a condition item representing a size is provided, and there are three options of "L", "M", and "S" regarding the condition item. Since M is smaller than L and S is smaller than M, the conversion from the character string data to the numerical data can be performed using the order feature amount for the condition item. In this case, for example, S is converted to 0, M is converted to 1, and L is converted to 2.

Furthermore, it is assumed that a condition item representing resolution is provided, and there are three options of "high resolution", "standard", and "low resolution" regarding the condition item. In this case, on the basis of the actual resolution, for example, the high resolution is converted to "1,440,000" (= 1,200 × 1,200), the standard is converted to "720,000" (= 1,200 × 600), and the low resolution is converted to "360,000" (= 600 × 600).

Furthermore, a new data item can be generated from the values of one or more condition items. For example, the "ink amount" shown in Fig. 10 is a data item newly generated from the values of a plurality of condition items included in the print result log 6. The value of the ink amount represents the total usage (unit: mL) of inks of four colors (K, C, M, and Y) per square meter, and is calculated using the values of the data items with column numbers 11 to 15 and 22 among the data items (condition items) shown in Fig. 13. When the unit of the print length is m, the unit of the K usage, the C usage, the M usage, and the Y usage is mL, and the unit of the paper width is mm, a value Vink of the ink amount is calculated by the following equation (1). $Vink = \frac{V \left(K\right) + V \left(C\right) + V \left(M\right) + V \left(Y\right)}{PW \times 0.001 \times PL}$

In the above equation (1), V(K) represents K usage, V(C) represents C usage, V(M) represents M usage, V(Y) represents Y usage, PW represents paper width, and PL represents print length.

Meanwhile, regarding the data item treated as an explanatory variable, a range of values that can be taken and the unit of the value differ depending on the item. Therefore, in order to prevent an unfavorable result from being obtained as the search result of the recommended candidate value due to such a difference, in step S200, a scaling process by normalization or standardization is performed on the value of the data item treated as the explanatory variable (explanatory variable value). In this regard, when the scaling process by normalization is performed, the maximum value and the minimum value of the corresponding explanatory variable are stored, and when the scaling process by standardization is performed, the average value and the standard deviation of the corresponding explanatory variable are stored. When the printing condition is inputted by the operator in step S40, a similar scaling process is performed on each of explanatory variable values corresponding to the input printing condition.

After completion of step S200, the values of the data items treated as the explanatory variables (explanatory variable values) and the values of the print parameters treated as the objective variables (objective variable values) are extracted from the print result logs 6 accumulated in the log database 210 and the data obtained by the process of step S200 (step S210). As a result, a plurality of explanatory variable value sets and a plurality of objective variable value sets are extracted. Further, a unique identification numeral (identification number) is assigned to each of the plurality of extracted explanatory variable value sets. Similarly, a unique identification numeral (identification number) is assigned to each of the plurality of extracted objective variable value sets. In order to prevent the total number of explanatory variable value sets from becoming large, a plurality of explanatory variable value sets may be combined as one explanatory variable value set by rounding the explanatory variable values, for example. The same applies to the objective variable value set.

After completion of step S210, teacher data for use in learning for constructing the recommended candidate value search model 61 is generated (step S220). In this regard, printing in the inkjet printing apparatus 10 is not necessarily executed after the parameter values are set such that a high-quality printed material is obtained. As described above, when printing based on the printing condition that has not been experienced by the operator before is performed, the adjustment of the parameter value is repeated until a printed material of sufficient quality is obtained by, for example, test printing. In such a case, the print result logs 6 transmitted from the inkjet printing apparatus 10 to the management server 20 include a log based on printing executed after the parameter values are set such that print quality becomes low and a log based on printing executed after the parameter values are set such that print quality becomes high. When the print result logs 6 indicate that the printing of the same job is repeated while the parameter values are changed, it can be determined that the print result logs 6 are logs obtained when the adjustment of the parameter values is repeatedly performed while test printing is performed to improve print quality.

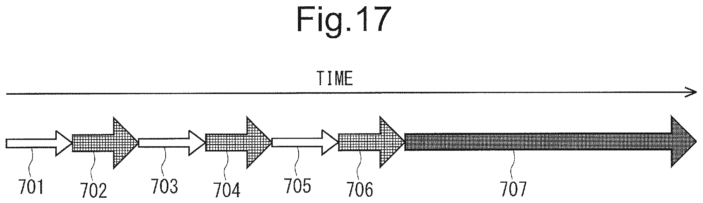

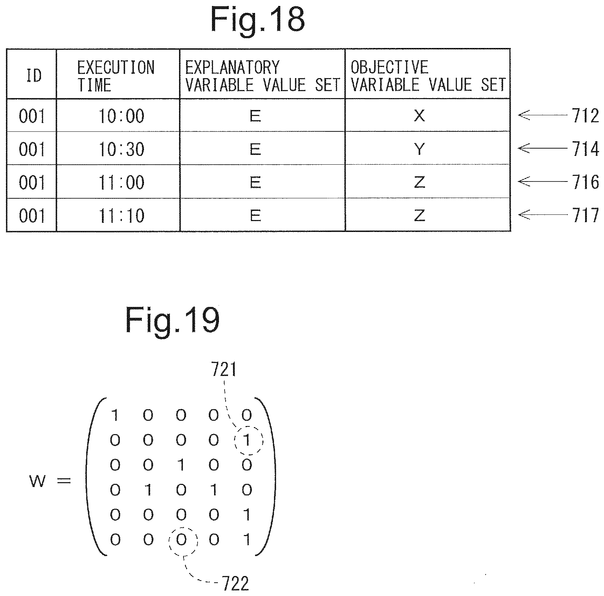

It is not preferable for teacher data for use in learning to construct the recommended candidate value search model 61 to include data based on the print result log 6 obtained by execution of test printing (specifically, test printing in which a printed material of sufficient quality was not obtained). Therefore, in the present embodiment, the print result log 6 is classified into the log obtained by the execution of the test printing and the log obtained by the execution of the actual printing, and only data based on the log obtained by the execution of the actual printing is used for learning as the teacher data. A method for realizing this will be described below with reference to Figs. 17 and 18.

Fig. 17 is a diagram schematically showing a flow of parameter value adjustment. Arrows denoted by reference numerals 701, 703, and 705 represent the time during which the operator adjusts the parameter values, arrows denoted by reference numerals 702, 704, and 706 represent the time during which test printing after the adjustment of the parameter values is performed, and an arrow denoted by reference numeral 707 represents time during which actual printing is performed. In this example, the adjustment of the parameter values and the test printing are repeated three times, and the actual printing is performed after the third test printing. In such a case, four print result logs 6 as schematically shown in Fig. 18 are obtained. In Fig. 18, symbol E represents one explanatory variable value set, and symbols X, Y, and Z represent different objective variable value sets. In addition, the print result logs 6 in the rows indicated by the arrows denoted by reference numerals 712, 714, 716, and 717 in Fig. 18 are logs obtained by printing performed at times indicated by the arrows denoted by reference numerals 702, 704, 706, and 707 in Fig. 17, respectively. Note that the ID is a number for identifying a job. When printing of the same job is repeated, printing with the last execution time is generally considered to be the actual printing, as in the examples shown in Figs. 17 and 18. It is also considered that the print quality becomes high according to the parameter values at the time of actual printing, but the print quality becomes low according to the parameter values at the time of test printing.

In consideration of the above, in the present embodiment, when there are a plurality of print result logs 6 resulting from repeating printing of the same job a plurality of times, a high-quality label is assigned to the print result log 6 obtained from printing with the last execution time. Then, only data based on the print result log 6 with the high-quality label is used for learning as teacher data. More specifically, in step S220, first, a large number of print result logs 6 accumulated in the log database 210 are classified on the basis of IDs (job IDs) each being a number for identifying a job. As a result, the print result log 6, which is only one print result log 6 with the same ID, is assigned the high-quality label. On the other hand, as for a plurality of print result logs 6 with the same IDs, the high-quality label is assigned to the print result log 6 obtained from printing with the last execution time, and a low-quality label is assigned to each of the other print result logs 6. However, as for the print result logs 6 considered to have been obtained by the test printing, the low-quality label is not assigned to a log (in the example shown in Fig. 18, the log in the row indicated by the arrow denoted by reference numeral 716) with the same explanatory variable value set as the print result log 6 considered to have been obtained by the actual printing. After the print result log 6 is labeled in the above manner, only data based on the print result log 6 with the high-quality label is extracted as teacher data. Hereinafter, the high-quality label and the low-quality label are collectively referred to as a "quality label".

Note that the high-quality label may be assigned to the print result log 6 with a large number of copies printed or the print result log 6 with a long execution time. In addition, the configuration may be such that all the print result logs 6 are used as teacher data, and data that can be considered as an outlier on the basis of the distance in the data space is determined to be data that is based on the print result log 6 obtained by test printing in the recommended candidate value search processing to be described later.

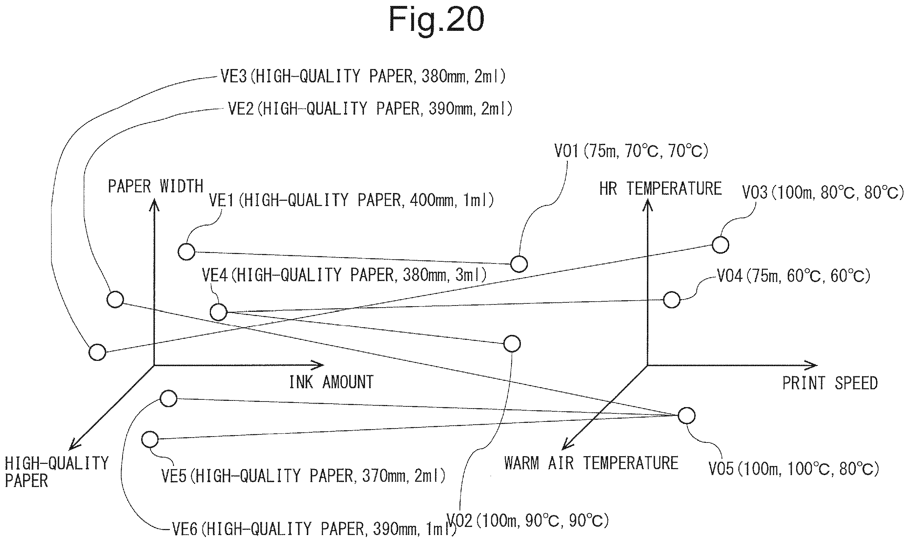

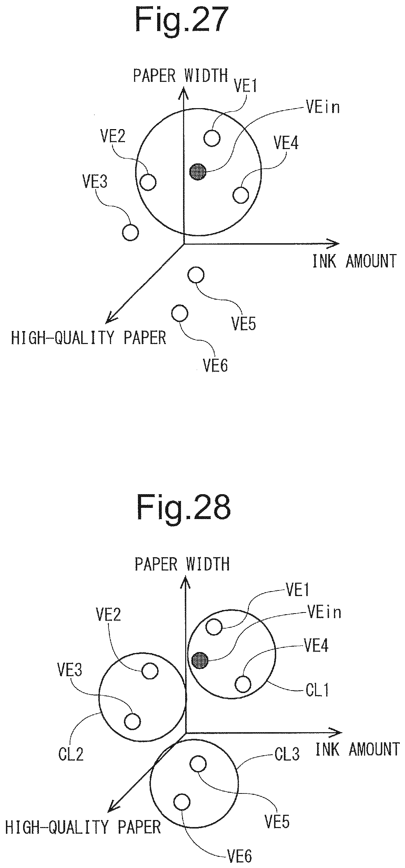

After completion of step S220, a weight matrix W representing the appearance frequency (the number of executions of the actual printing) for each combination of the explanatory variable value set and the objective variable value set is generated using the teacher data generated in step S220 (step S230). Fig. 19 shows an example of the weight matrix W when the total number of explanatory variable value sets is 6 and the total number of objective variable value sets is 5. The weight matrix W shown in Fig. 19 is a matrix generated when six explanatory variable value sets VE1 to VE6 and five objective variable value sets VO1 to VO5 as schematically shown in Fig. 20 are included in the teacher data, and is a matrix of 6 rows and 5 columns. For example, focusing on the explanatory variable value set VE1, Fig. 20 shows that the combination of the explanatory variable value set VE1 and the objective variable value set VO1 is included in the teacher data. For example, focusing on the objective variable value set VO5, Fig. 20 shows that the combination of the explanatory variable value set VE2 and the objective variable value set VO5, the combination of the explanatory variable value set VE5 and the objective variable value set VO5, and the combination of the explanatory variable value set VE6 and the objective variable value set VO5 are included in the teacher data. Note that the "paper type" is converted to three print parameters of "high-quality paper", "gloss-coated paper", and "matte-coated paper" (as described above, these print parameters are not the print parameters treated as the objective variable) by one-hot encoding in step S200 (cf. Fig. 16). In the schematic diagram of Fig. 20, the coordinate axis is illustrated only for "high-quality paper" among these three print parameters, and illustration of the coordinate axis is omitted for each of the other two print parameters, "gloss-coated paper" and "matte-coated paper". The same applies to Figs. 27 to 29 to be described later.

With respect to the weight matrix W shown in Fig. 19, for example, five component values (numerical values) in the second row represent the appearance frequencies of the combinations of the explanatory variable value set VE2 and each of the objective variable value sets VO1 to VO5. For example, six component values in the third column represent the appearance frequencies of the combinations of each of the explanatory variable value sets VE1 to VE6 and the objective variable value set VO3. Therefore, for example, the component value denoted by reference numeral 721 represents the appearance frequency of the combination of the explanatory variable value set VE2 and the objective variable value set VO5, and the component value denoted by reference numeral 722 represents the appearance frequency of the combination of the explanatory variable value set VE6 and the objective variable value set VO3.

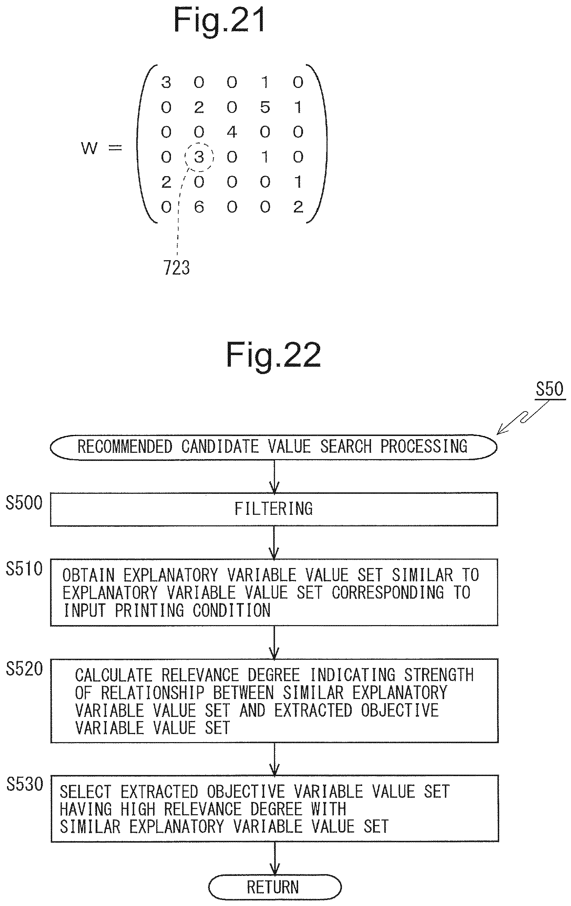

For convenience of explanation, only 0 and 1 are included as component values in the weight matrix W shown in Fig. 19. However, since the weight matrix W represents the appearance frequency for each combination of the explanatory variable value set and the objective variable value set, in practice, the weight matrix W includes component values of two or more, as shown in Fig. 21 for example. For example, a component value denoted by reference numeral 723 in Fig. 21 indicates that the appearance frequency of the combination of the explanatory variable value set VE4 and the objective variable value set VO2 is three times.

In practice, the total number of explanatory variable value sets is, for example, 10,000 to 20,000, and the total number of objective variable value sets is, for example, 200 to 300. When the total number of explanatory variable value sets is I and the total number of objective variable value sets is J, the weight matrix W is a matrix of I rows and J columns.

By generating the weight matrix W in the above manner, the recommended candidate value search model 61 for obtaining candidates (recommended candidate values 63) for the recommended value 64 of the print parameter depending on the input printing condition is constructed. This completes the print result aggregation processing. Meanwhile, performing the process to obtain the recommended candidate values 63 using the weight matrix W requires the information on the explanatory variable value set corresponding to each row of the weight matrix W and the information on the objective variable value set corresponding to each column of the weight matrix W. Therefore, the recommended candidate value search model 61 includes data including those pieces of information and the weight matrix W (hereinafter, the data is referred to as "aggregated print result data").

### <5.3.3 Recommended candidate value search processing>

Fig. 22 is a flowchart showing a detailed procedure for the recommended candidate value search processing. The recommended candidate value search processing is performed by the print control device 110 included in the inkjet printing apparatus 10. In the recommended candidate value search processing, an explanatory variable value set similar to the explanatory variable value set corresponding to the input printing condition is obtained using the aggregated print result data included in the recommended candidate value search model 61 transmitted from the management server 20 to the inkjet printing apparatus 10. At that time, as will be described later, the distance (distance in the data space) between the two explanatory variable value sets is obtained. However, some explanatory variables can be used for distance calculation while others cannot be used for distance calculation. For example, the ink amount and the resolution can be used for the distance calculation, but the apparatus type cannot be used for the distance calculation. The reason why the apparatus type cannot be used for distance calculation is that the type of the drying mechanism to be used and the number of components in the drying mechanism are different depending on the apparatus type, and the number of objective variables (the dimension of the data space of the objective variable value set) changes when the apparatus type changes.

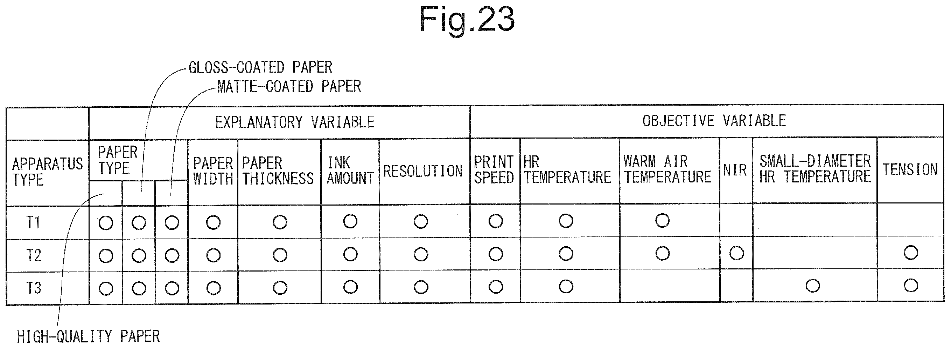

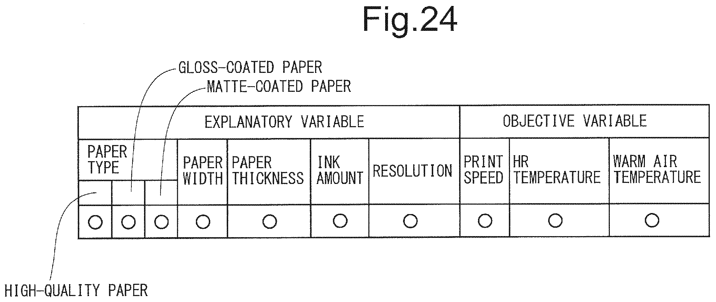

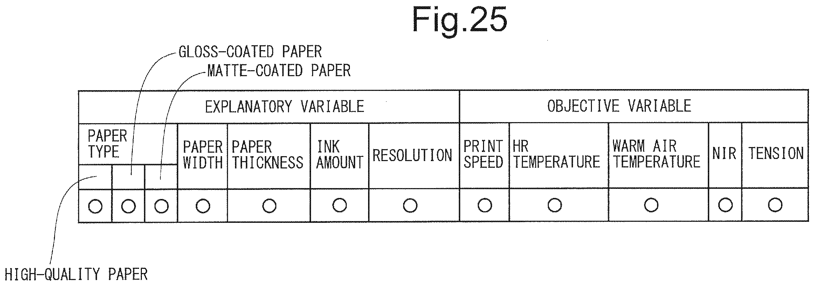

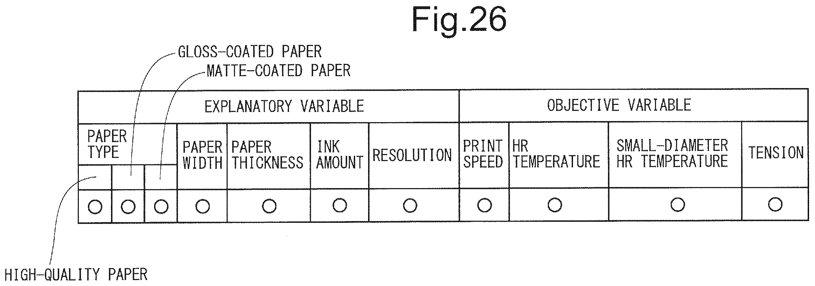

Therefore, in the recommended candidate value search processing, first, the aggregated print result data is filtered on the basis of the values of the explanatory variables that cannot be used for distance calculation (step S500). Here, it is assumed that the aggregated print result data includes data of each of three apparatus types T1, T2, T3. It is also assumed that data items related to each of the three apparatus types T1, T2, and T3 are data items circled in Fig. 23. In this example, the aggregated print result data is filtered on the basis of the apparatus type included in the input printing condition. When the apparatus type included in the input printing condition is T1, only data for the apparatus type T1 is extracted from the aggregated print result data. At this time, the data of each data item shown in Fig. 24 is extracted. When the apparatus type included in the input printing condition is T2, only data for the apparatus type T2 is extracted from the aggregated print result data. At this time, the data of each data item shown in Fig. 25 is extracted. When the apparatus type included in the input printing condition is T3, only data for the apparatus type T3 is extracted from the aggregated print result data. At this time, the data of each data item shown in Fig. 26 is extracted.

After completion of the filtering, an explanatory variable value set (hereinafter referred to as a "similar explanatory variable value set") similar to the explanatory variable value set (hereinafter referred to as an "input explanatory variable value set") corresponding to the input printing condition is obtained (step S510). Regarding this, a method using a neighborhood method and a method using clustering can be considered.

In the method using the neighborhood method, the distance between the input explanatory variable value set and each explanatory variable value set included in the aggregated print result data (more specifically, the distance between the position vector representing the input explanatory variable value set and the position vector representing each explanatory variable value set included in the aggregated print result data in the data space of the explanatory variable value set) is calculated, and the top N (where N is an integer) explanatory variable value sets, for which short distances have been obtained, are selected as the similar explanatory variable value set. For example, as shown in Fig. 27, with N as 3, three explanatory variable value sets VE1, VE2, VE4 with short distances from the input explanatory variable value set VEin are selected as the similar explanatory variable value sets.

In the method using clustering, a plurality of explanatory variable value sets included in the aggregated print result data are classified into a plurality of clusters in advance. Then, a cluster to which the input explanatory variable value set belongs is obtained from the plurality of clusters. The explanatory variable value set belonging to the obtained cluster is selected as the similar explanatory variable value set. In the example shown in Fig. 28, six explanatory variable value sets VE1 to VE6 are classified into three clusters CL1 to CL3, and the input explanatory variable value set VEin belongs to the cluster CL1 among the three clusters CL1 to CL3. As a result, two explanatory variable value sets VE1, VE4 belonging to the cluster CL1 are selected as the similar explanatory variable value sets.

As the distance (the distance in the data space) used in step S510, typically, the Euclidean distance (Euclidean norm: L₂ norm) is adopted. However, a distance other than the Euclidean distance may be used. For example, the Manhattan distance (L₁ norm) or the infinite norm (L_{∞} norm) may be used.

In step S510, a similarity vector S having similarities between each of the plurality of similar explanatory variable value sets and the input explanatory variable value set as elements is further generated. For example, in a case in which the number of similar explanatory variable value sets is three, when the similarity between the i-th similar explanatory variable value set (i is an integer between 1 and 3) and the input explanatory variable value set is represented by sᵢ, the similarity vector S is expressed by the following equation (2). $S = \left(\begin{matrix}{s}_{1} \\ {s}_{2} \\ {s}_{3}\end{matrix}\right)$

As a specific value of the similarity sᵢ, for example, the reciprocal of the distance calculated as described above can be adopted. As a result, the value of the similarity sᵢ is larger for the similar explanatory variable value set with a shorter distance from the input explanatory variable value set. However, in a case where the weighting calculation depending on the distance between the input explanatory variable value set and the similar explanatory variable value set is not performed in the processing in and after step S520, the values of all the elements (the values of all the similarities sᵢ) may be the same value as shown in the following equation (3). $S = \left(\begin{matrix}1 \\ 1 \\ 1\end{matrix}\right)$

Meanwhile, in step S510, a plurality of explanatory variable value sets are selected as similar explanatory variable value sets. Hereinafter, the objective variable value set combined with any one of the plurality of similar explanatory variable value sets in the aggregated print result data is referred to as an "extracted objective variable value set" for convenience. At the time when step S510 is completed, a plurality of similar explanatory variable value sets and a plurality of extracted objective variable value sets are obtained.

After completion of step S510, the relevance degrees indicating the strength of the relationship between each of the plurality of similar explanatory variable value sets and each of the plurality of extracted objective variable value sets are calculated (step S520). Specifically, the relevance degree rᵢⱼ representing the strength of the relationship between the i-th similar explanatory variable value set and the j-th extracted objective variable value set is calculated by the following equation (4). ${r}_{ij} = \frac{{w}_{ij}}{{\sum }_{k = 1}^{m} {w}_{ik}}$

In the above equation (4), m represents the number of extracted objective variable value sets, wᵢⱼ represents the appearance frequency of the combination of the i-th similar explanatory variable value set and the j-th extracted objective variable value set, and wᵢₖ represents the appearance frequency of the combination of the i-th similar explanatory variable value set and the k-th extracted objective variable value set.

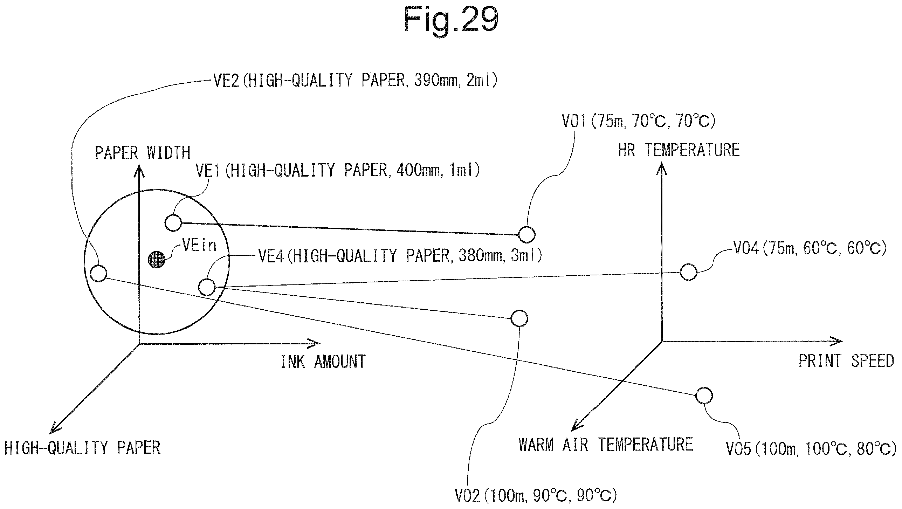

A relevance degree matrix R representing the relevance degree rᵢⱼ for each combination of the similar explanatory variable value set and the extracted objective variable value set is obtained on the basis of the relevance degree rᵢⱼ calculated by the above equation (4). For example, as shown in Fig. 29, when the number of similar explanatory variable value sets is 3 and the number of extracted objective variable value sets is 4, a relevance degree matrix R expressed by the following equation (5) is obtained. $R = \left(\begin{matrix}{r}_{11} & {r}_{12} & {r}_{13} & {r}_{14} \\ {r}_{21} & {r}_{22} & {r}_{23} & {r}_{24} \\ {r}_{31} & {r}_{32} & {r}_{33} & {r}_{34}\end{matrix}\right)$

After completion of step S520, a plurality of extracted objective variable value sets having a high relevance degree with the similar explanatory variable value set are selected as recommended candidate objective variable value sets that are objective variable value sets to be candidates for the output targets (recommended objective variable value sets) in step S70 of Fig. 14 (step S530). In the present embodiment, a predetermined number of extracted objective variable value sets are selected on the basis of the relevance degree rᵢⱼ calculated in step S520. Note that a predetermined number of extracted objective variable value sets, for which recommendation degrees to be described later are higher values, may be selected. When the predetermined number of extracted objective variable value sets are selected as candidates for the output targets in step S70 of Fig. 14, the recommended candidate value search processing is completed.

Although filtering based on the apparatus type is performed in step S500 in the above description, the present invention is not limited thereto. The configuration may be such that, instead of the filtering in step S500, the weight matrix W is generated for each apparatus type by the management server 20. That is, the weight matrix W may be generated for each apparatus type in step S230 of Fig. 15. In this case, the recommended candidate value search processing is performed using the weight matrix W corresponding to the target apparatus type.

### <5.3.4 Recommended candidate value evaluation processing>

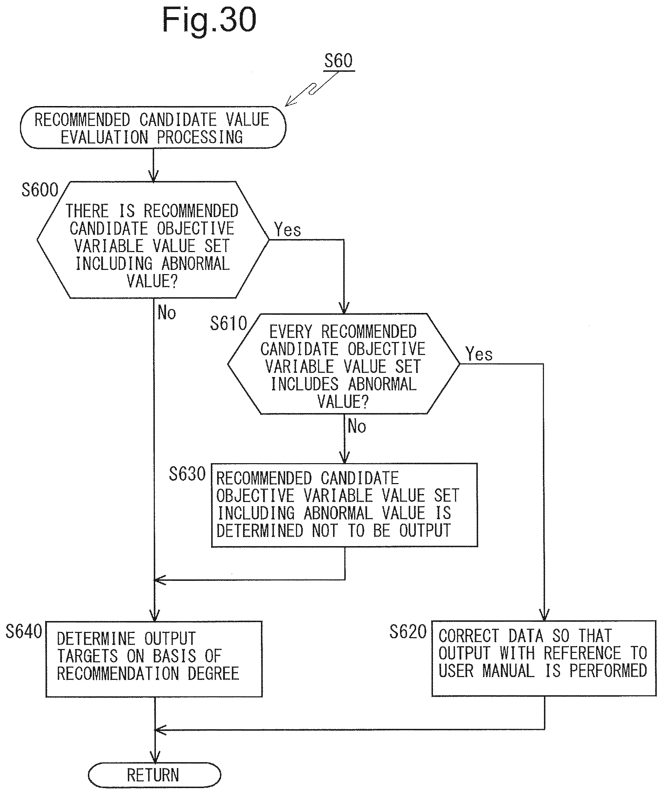

Fig. 30 is a flowchart showing a detailed procedure for the recommended candidate value evaluation processing. By the start time of the recommended candidate value evaluation processing, a plurality of recommended candidate objective variable value sets have been obtained. After the start of the recommended candidate value evaluation processing, first, it is determined whether or not there is a recommended candidate objective variable value set including an abnormal value (abnormal setting value) as a parameter value (step S600). In this regard, for example, when the drying temperature (e.g., HR temperature or warm air temperature) at which the drying mechanism 125 dries the print paper PA is set to an abnormally high value or an abnormally low value, the print paper PA is not normally dried. Therefore, an upper limit and a lower limit are determined for the value of the drying temperature, and it is inspected whether or not the value of the drying temperature included in each recommended candidate objective variable value set is included within a range from the lower limit to the upper limit. Further, it is inspected whether or not the values of the print parameters (e.g., the value of the conveyance speed and the value of the tension) other than the drying temperature are each included within a range from the lower limit to the upper limit. In this manner, the objective variable values included in each recommended candidate objective variable value set are compared with the respective predetermined thresholds, and it is inspected whether or not an abnormal value is included in each recommended candidate objective variable value set. As a result, when there is a recommended candidate objective variable value set including an abnormal value, the processing proceeds to step S610, and when there is no recommended candidate objective variable value set including an abnormal value, the processing proceeds to step S640.

Note that various methods other than the method described above can be adopted for the determination in step S600. For example, the configuration may be such that one lower limit is set for the value of the drying temperature, and when all of the plurality of drying temperatures (the plurality of drying temperatures corresponding to the plurality of drying mechanisms) included in the recommended candidate objective variable value set are less than the lower limit, it is determined that an abnormal value is included in the recommended candidate objective variable value set. In addition, for example, the configuration may be such that an upper limit regarding the sum value of the drying temperatures of the plurality of drying mechanisms is defined, and when the sum value of the plurality of drying temperatures (the plurality of drying temperatures corresponding to the plurality of drying mechanisms) included in the recommended candidate objective variable value set exceeds the upper limit, it is determined that an abnormal value is included in the recommended candidate objective variable value set. Moreover, it is also possible to prepare a determination equation including values of a plurality of print parameters (e.g., the value of the drying temperature and the value of the conveyance speed) so that the relationship between the plurality of print parameters is considered, and determine whether or not an abnormal value is included in the recommended candidate objective variable value set on the basis of the value obtained by the determination equation.

In step S610, it is determined whether or not an abnormal value is included in all the recommended candidate objective variable value sets selected in the recommended candidate value search processing. As a result, when all the recommended candidate objective variable value sets include an abnormal value, the processing proceeds to step S620, and when there is a recommended candidate objective variable value set that does not include an abnormal value, the processing proceeds to step S630.

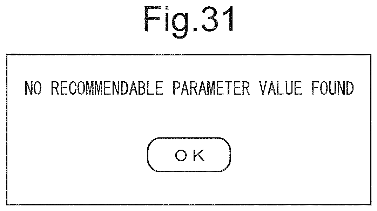

In step S620, the data is corrected so that the output with reference to a user manual is performed in step S70 of Fig. 14. Note that the data may be corrected so that, for example, a message screen as shown in Fig. 31, indicating that the recommended value of the parameter value could not be obtained, is outputted in step S70 of Fig. 14

In step S630, the recommended candidate objective variable value set including an abnormal value among the plurality of recommended candidate objective variable value sets selected in the recommended candidate value search processing is determined to be ineligible for output in step S70 of Fig. 14.

In step S640, the recommendation degree for each of the plurality of recommended candidate objective variable value sets not including an abnormal value is calculated, and the top K (where K is an integer) recommended candidate objective variable value sets, for which high recommendation degrees have been obtained, are determined to be the output target in step S70 of Fig. 14. In other words, the recommended candidate objective variable value sets excluding the top K recommended candidate objective variable value sets, for which high recommendation degrees have been obtained, are determined to be ineligible for output in step S70 of Fig. 14.

In the present embodiment, a recommendation degree vector P having the recommendation degree of each of the plurality of extracted objective variable value sets as an element is expressed by the following equation (6). Note that T is an operator representing transpose. $P = {R}^{τ} s$

From the above equation (2) and the above equation (5), the above equation (6) is expressed by the following equation (7). $P = \left(\begin{matrix}{p}_{1} \\ {p}_{2} \\ {p}_{3} \\ {p}_{4}\end{matrix}\right) = \left(\begin{matrix}{r}_{11} ⋅ {s}_{1} + {r}_{21} ⋅ {s}_{2} + {r}_{31} ⋅ {s}_{3} \\ {r}_{12} ⋅ {s}_{1} + {r}_{22} ⋅ {s}_{2} + {r}_{32} ⋅ {s}_{3} \\ {r}_{13} ⋅ {s}_{1} + {r}_{23} ⋅ {s}_{2} + {r}_{33} ⋅ {s}_{3} \\ {r}_{14} ⋅ {s}_{1} + {r}_{24} ⋅ {s}_{2} + {r}_{34} ⋅ {s}_{3}\end{matrix}\right)$

Regarding the above equation (7), pⱼ represents the recommendation degree of the j-th extracted objective variable value set. Here, attention is paid to the recommendation degrees of the plurality of recommended candidate objective variable value sets selected in the recommended candidate value search processing among the recommendation degrees of all the extracted objective variable value sets, and the top K recommended candidate objective variable value sets, for which high recommendation degrees have been obtained, are determined to be the output target as described above.

When the processes of step S620 or step S640 are completed, the recommended candidate value evaluation processing is completed.

As above, the recommended candidate value evaluation unit 1161 determines whether or not the value of the print parameter included in each of the plurality of recommended candidate objective variable value sets satisfies a predetermined threshold condition, and excludes the recommended candidate objective variable value set including the value of the print parameter that does not satisfy the predetermined threshold condition from selection targets as the output targets. The recommended candidate value evaluation unit 1161 calculates a recommendation degree for each of the plurality of recommended candidate objective variable value sets on the basis of the aggregated print result data, and excludes a recommended candidate objective variable value set excluding the top K (where K is an integer) recommended candidate objective variable value sets, for which high recommendation degrees have been obtained, from selection targets as the output targets.

### <5.3.5 Output of recommended value>

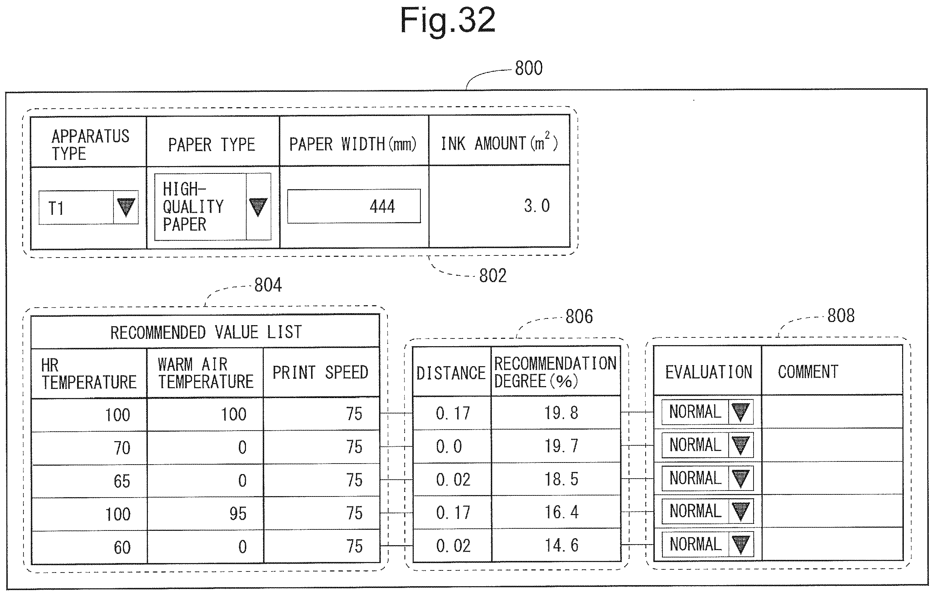

As described above, in step S70 of Fig. 14, the output of the recommended values of the print parameter (the output of the plurality of recommended objective variable value sets) is performed on the basis of the result of the recommended candidate value evaluation processing. Fig. 32 is a diagram showing an example of a recommended value information display screen 800 displayed on the display unit 523 of the print control device 110 as the computer 500 in step S70 of Fig. 14. The recommended value information display screen 800 includes an explanatory variable value input area 802, a recommended value list output area 804, a recommendation degree output area 806, and an evaluation input area 808.

In the explanatory variable value input area 802, the value of each of the explanatory variables is displayed on the basis of the input printing condition. That is, the explanatory variable value set corresponding to the input printing condition is displayed in the explanatory variable value input area 802. In the recommended value list output area 804, a plurality of objective variable value sets determined to be output targets as recommended objective variable value sets in the recommended candidate value evaluation processing are displayed. In the recommendation degree output area 806, a distance and a recommendation degree are displayed for each of the plurality of objective variable value sets determined to be the output targets. Note that the distance displayed in the recommendation degree output area 806 is a distance between the explanatory variable value set (similar explanatory variable value set) having a high relevance degree with the corresponding objective variable value set and the explanatory variable value set corresponding to the input printing condition in the data space. Regarding the evaluation input area 808, the operator can select an evaluation from a plurality of options and input a comment for each of the plurality of objective variable value sets determined to be the output targets.

The recommendation degree displayed in the recommendation degree output area 806 may be a value obtained by performing conversion so that the total value of the recommendation degrees of the plurality of objective variable value sets determined to be the output targets is 100, instead of the value calculated by the above equation (7). In this case, when the number of objective variable value sets determined to be the output targets is Q, the value calculated by the above equation (7) with respect to a given objective variable value set determined to be the output target is p, and the value calculated by the above equation (7) with respect to a k-th objective variable value set among the Q objective variable value sets is pₖ, the value pₐ calculated by the following equation (8) is displayed in the recommendation degree output area 806 as the recommendation degree with respect to the given objective variable value set. ${p}_{a} = \frac{p}{{\sum }_{k = 1}^{Q} {p}_{k}} \times 100$

Note that the screen example shown in Fig. 32 is an example, and the present invention is not limited thereto. For example, the recommendation degree output area 806 and the evaluation input area 808 may not be provided. The print parameter (item) for outputting the recommended value is not particularly limited as long as a plurality of recommended values for at least one of the conveyance speed and the drying temperature as the print parameter are outputted. Furthermore, regarding the output of the recommended values of the print parameter, the output to the display unit has been described as an example, but the output may be performed as a printed material.

### <6. Flow of print execution>

Although the recommended values of the print parameter are presented by the parameter value adjustment support processing described above, for example, in a case where the number of teacher data used for learning for constructing the recommended candidate value search model 61 is insufficient, a high-quality printed material may not be obtained even when the parameter value is set depending on the presented recommended values. In such a case, the adjustment of the parameter value is repeated until a printed material of sufficient quality is obtained. In the present embodiment, printing is executed according to the following procedure so that the result of the quality obtained by each printing is reflected in the teacher data even when the adjustment of the parameter value is repeated after the parameter value adjustment support processing.

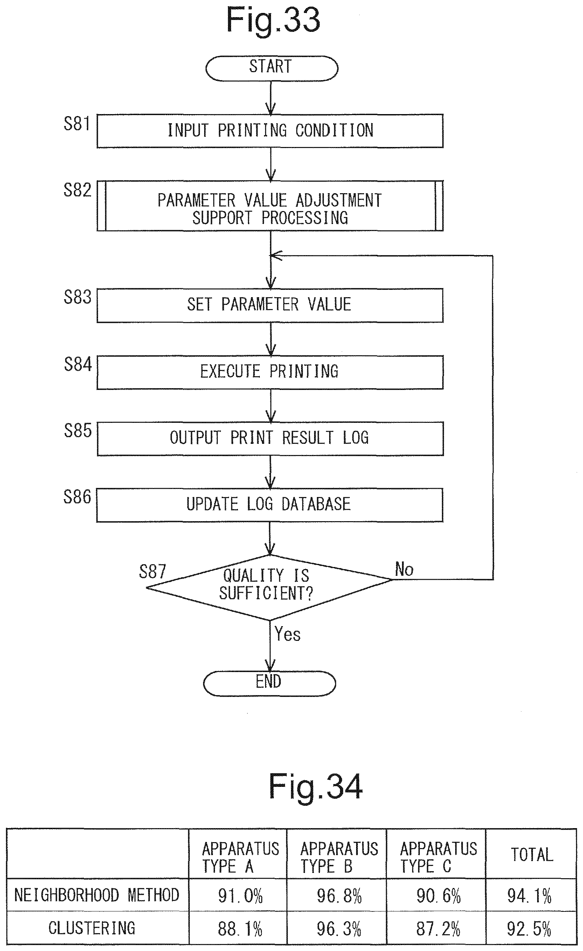

Fig. 33 is a flowchart for describing the flow of the print execution in the present embodiment. First, the printing condition is inputted by the operator (step S81). Then, the parameter value adjustment support processing is performed on the basis of the input printing condition (step S82). Thereafter, the parameter value is set by the operator on the basis of the result obtained by the parameter value adjustment support processing (step S83).

After the parameter values are set, printing is executed by the inkjet printing apparatus 10 (step S84). Then, the print result log 6 indicating the execution status of printing is outputted (step S85). The print result log 6 outputted in step S85 is transmitted from the inkjet printing apparatus 10 to the management server 20, and the management server 20 updates the log database 210 using the print result log 6 (step S86). Further, whether or not the quality is sufficient is determined by the operator or the like on the basis of the printed material obtained by executing the printing in step S84. As a result, when the quality is sufficient, the series of processing for printing is completed, and when the quality is not sufficient, the processing returns to step S83.

Here, the update of the log database 210 performed in step S86 will be described in detail. When the processes of steps S83 to S87 are repeated in the series of processing shown in Fig. 33, a plurality of print result logs 6 are outputted for the same job. Regarding the plurality of print result logs 6, the high-quality label is assigned to a log obtained from printing with the last execution time, and the low-quality label is assigned to a log having an explanatory variable value set different from that of the log with the high-quality label. After the quality label is assigned to the print result log 6 in this manner, the log database 210 is updated. As described above, only data based on the print result log 6 with the high-quality label is extracted as teacher data for use in learning for constructing the recommended candidate value search model 61. Therefore, by updating the log database 210 as in the present embodiment, it is possible to output a suitable parameter value as recommended values accurately.

### <7 Effects>

According to the present embodiment, a plurality of recommended candidate values 63, which are candidates for the recommended values 64 of the print parameter, are obtained on the basis of the input printing condition 62 by the recommended candidate value search model 61 learned by machine learning. The plurality of recommended candidate values 63 are evaluated by the recommended candidate value evaluation unit 1161, and a plurality of recommended values 64 are outputted on the basis of the evaluation result. Since the candidates (recommended candidate values 63) for the recommended values 64 of the print parameter are obtained by the recommended candidate value search model 61 learned by machine learning as above (in other words, the candidates for the recommended values 64 of the print parameter are obtained using the AI technology), the parameter values can be easily adjusted compared to the related art. In addition, since each recommended candidate value 63 is evaluated, only appropriate parameter values can be presented as recommended values. From the above, according to the present embodiment, the operator can appropriately and easily adjust the parameter value in the inkjet printing apparatus 10 regardless of the work experience.

Further, according to the present embodiment, the recommendation degree for each of the plurality of recommended values 64 (a plurality of recommended objective variable value sets) is presented. Therefore, the operator can determine the validity as a set value for of each recommended value (each recommended objective variable value set).

Moreover, according to the present embodiment, the appearance frequency of each combination of the explanatory variable value set and the objective variable value set is considered when the plurality of recommended candidate values 63 are searched. It can be considered that the obtainment of a high-quality printed material is ensured for a combination (a combination of an explanatory variable value set and an objective variable value set) with a high appearance frequency. Therefore, a suitable parameter values are accurately outputted as the recommended values.

Furthermore, according to the present embodiment, for example, when printing based on printing condition that have not been experienced by the operator before is performed, the number of times of test printing executed until a printed material of sufficient quality is obtained is reduced compared to the related art. As a result, wasteful consumption of ink and print media (print paper PA, etc.) is reduced. In this manner, it is possible to contribute to the achievement of the sustainable development goals (SDGs).

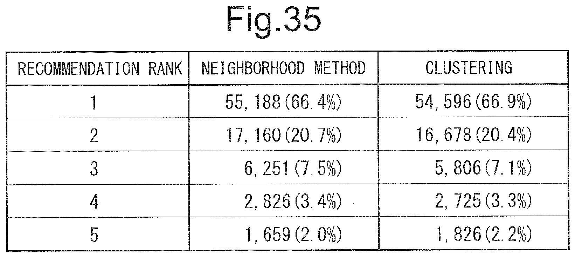

Hereinafter, a result of cross-validation performed using data (print result logs 6) of three apparatus types to confirm the effect of the present embodiment will be described. In the example described here, the print result logs 6 accumulated in the management server 20 are separated into five groups. Fig. 34 shows a percentage at which a correct result was obtained in each of a case where the method using the neighborhood method was adopted to obtain the similar explanatory variable value set and a case where the method using clustering was adopted to obtain the similar explanatory variable value set. Here, a result in which the true setting value is included in five values outputted as the recommended values is considered "correct". As can be grasped from Fig. 34, an accuracy rate of 94.1% has been obtained in total for the case where the method using the neighborhood method was adopted, and an accuracy rate of 92.5% has been obtained in total for the case where the method using clustering was adopted. Fig. 35 shows the number of cases where the recommended value matched the true set value and percentage thereof, for each recommendation rank. From Fig. 35, it can be grasped that the recommended value with the first recommendation degree matched the true set value with a probability of 60% or more, both when the method using the neighborhood method was adopted to obtain the similar explanatory variable value set and when the method using clustering is adopted to obtain the similar explanatory variable value set. The average number of times of adjustment is about 1.5, both when the method using the neighborhood method was adopted to obtain the similar explanatory variable value set and when the method using clustering is adopted to obtain the similar explanatory variable value set. Meanwhile, according to the investigation, the average number of times of adjustment of the parameter value is 3.8 in the case of performing printing based on printing condition in which the adjustment of the parameter value is difficult. From the above, with respect to printing based on printing condition in which the adjustment of the parameter value is difficult, the number of times of adjustment of the parameter value can be reduced by about 60% compared to the related art with a probability of 92% or more by adopting the method of the present embodiment.

<8. Modifications>

Modifications of the above embodiment will be described below.

### <8.1 First Modification>

In the above embodiment, the print result logs 6 are transmitted from the plurality of inkjet printing apparatuses 10 to the management server 20, the recommended candidate value search model 61 is constructed by the management server 20 on the basis of the print result logs 6 transmitted from the plurality of inkjet printing apparatuses 10, and the recommended candidate value search model 61 is transmitted from the management server 20 to the plurality of inkjet printing apparatuses 10. That is, in the above embodiment, the inkjet printing apparatus 10 performs the processing of obtaining the recommended values 64 of the print parameter on the basis of the recommended candidate value search model 61 constructed by the management server 20. However, the present invention is not limited thereto, and a configuration in which the recommended candidate value search model 61 is constructed by the print control device 110 in the inkjet printing apparatus 10 without using the management server 20 can also be adopted. Therefore, such a configuration will be described as a first modification of the above embodiment.

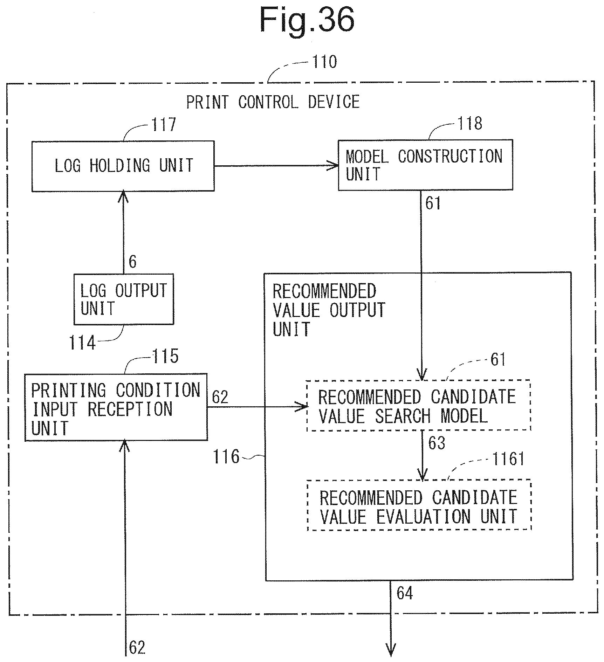

The configuration of the inkjet printing apparatus 10 in the present modification is similar to that of the above embodiment (cf. Fig. 2). Fig. 36 is a block diagram showing a functional configuration for realizing the parameter value adjustment support processing in the present modification. As components for realizing the parameter value adjustment support processing, the print control device 110 is provided with a log output unit 114, a printing condition input reception unit 115, a recommended value output unit 116, a log holding unit 117, and a model construction unit 118. As above, in the present modification, all the components for realizing the parameter value adjustment support processing are provided in the print control device 110.

The operations of the log output unit 114, the printing condition input reception unit 115, and the recommended value output unit 116 are similar to those in the above embodiment. The log holding unit 117 holds the print result log 6 outputted from the log output unit 114. The model construction unit 118 performs learning using data obtained on the basis of the print result logs 6 accumulated in the log holding unit 117 as teacher data, thereby constructing a recommended candidate value search model 61 configured to obtain candidates (recommended candidate values 63) for the recommended value 64 of the print parameter on the basis of the input printing condition 62.

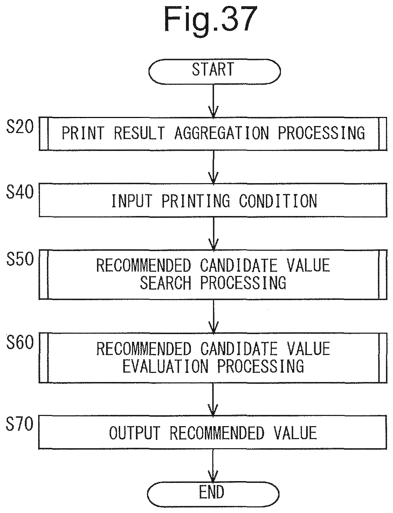

Fig. 37 is a flowchart showing a schematic procedure for the parameter value adjustment support processing in the present modification. First, print result aggregation processing of aggregating past print results is performed on the basis of the print result logs 6 held in the log holding unit 117 (step S20). As a result, the recommended candidate value search model 61 is constructed. Next, printing condition is inputted by the operator (S40). Thereafter, similarly to the above embodiment, recommended candidate value search processing (step S50) and recommended candidate value evaluation processing (step S60) are performed, and finally, the recommended values 64 of the print parameter is outputted on the basis of the result of the recommended candidate value evaluation processing (step S70).

### <8.2 Second Modification>

In the above embodiment, in the recommended candidate value evaluation processing, the output targets as the recommended values (recommended objective variable value set) are determined on the basis of the recommendation degree calculated by the above equation (6) (step S640 of Fig. 30). However, the present invention is not limited thereto. Hereinafter, a method for determining output targets using a neural network in the recommended candidate value evaluation processing will be described as a second modification of the above embodiment.

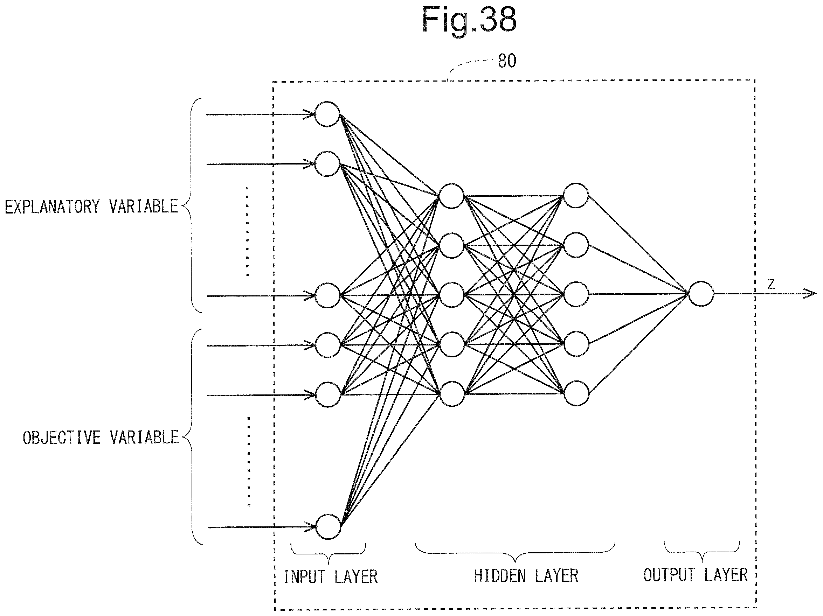

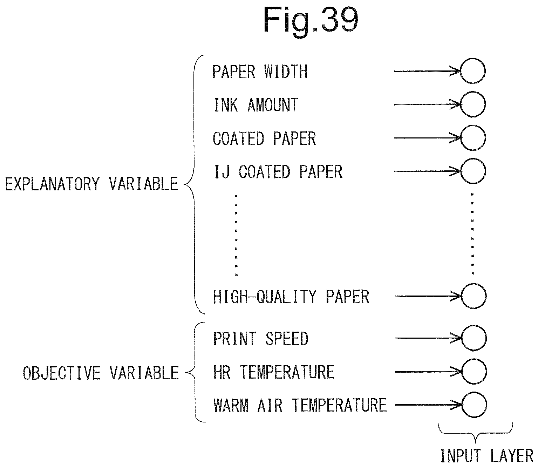

In the present modification, for example, a neural network 80 as shown in Fig. 38 is provided in the recommended candidate value evaluation unit 1161 (cf. Fig. 11). The neural network 80 includes an input layer, hidden layers (intermediate layers), and an output layer. The input layer includes units the number of which is equal to the sum of the number of explanatory variable values constituting the explanatory variable value set and the number of objective variable values constituting the objective variable value set. For example, as shown in Fig. 39, the explanatory variable values constituting the explanatory variable value set and the objective variable values constituting the objective variable value set are inputted to the input layer. The hidden layers include two layers each including five units. However, the number of units in the hidden layer and the number of layers in the hidden layer are not limited. The output layer includes one unit that outputs a value (output value z) between 0 to 1. The connection between the input layer and the hidden layer, the connection between the two hidden layers, and the connection between the hidden layer and the output layer are fully-connected. A sigmoid function is adopted as the activating function for each of the hidden layer and the output layer. A cross-entropy error is adopted as a loss function. Note that the output value z outputted from the output layer corresponds to quality data representing print quality.

In the learning using the neural network 80, a large number of print result logs 6 with the quality labels described above, accumulated in the log database 210, are used. At the time of the learning, the explanatory variable values and the objective variable values obtained on the basis of the print result log 6 are given to the input layer. As a result, forward propagation processing is performed in the neural network 80, and the output value z is outputted from the output layer. When the number of print result logs 6 used for learning is n, n output values z are outputted from the output layer. Then, on the basis of the n output values z and the values of the n quality labels, a cross-entropy error LogLoss expressed by the following equation (9) is calculated. $LogLoss = - \frac{1}{n} {\sum }_{t = 1}^{n} \left({y}_{t} {logz}_{t}+\left(1-{y}_{t}\right) log \left(1-{z}_{t}\right)\right)$

In the above equation (9), zₜ represents an output value (an output value from the output layer of the neural network 80) obtained on the basis of the t-th print result log 6, and yₜ represents a value of a quality label assigned to the t-th print result log 6.

After the cross-entropy error LogLoss is calculated by the above equation (9), the values of the parameters (weighting factor, bias) of the neural network 80 are updated by using the gradient descent method on the basis of the result obtained by the backpropagation process of the error.

In the present modification, under a situation where learning using the neural network 80 has been performed in advance as described above, output targets are determined as recommended values (recommended objective variable value set) in step S640 of Fig. 30 as follows.

With a plurality of recommended candidate objective variable value sets as processing targets one by one, an explanatory variable value set corresponding to the input printing condition and an objective variable value set as the processing target are given to the input layer of the neural network 80. Thereby, the output value z for each of the plurality of recommended candidate objective variable value sets is obtained, and each output value z is compared with a threshold prepared in advance. In other words, it is determined whether the print quality for each of the plurality of recommended candidate objective variable value sets becomes high or low on the basis of the quality data (output value z). As a result, the recommended candidate objective variable value set, for which the output value z equal to or more than the threshold has been obtained (the recommended candidate objective variable value set for which the print quality has been determined to become high), is determined to be the output target, and the recommended candidate objective variable value set, for which the output value z less than the threshold has been obtained (the recommended candidate objective variable value set for which the print quality has been determined to become low), is excluded from output targets. Alternatively, the configuration may be such that the top K (where K is an integer) recommended candidate objective variable value sets, for which the high output value z has been obtained, are determined to be the output targets.

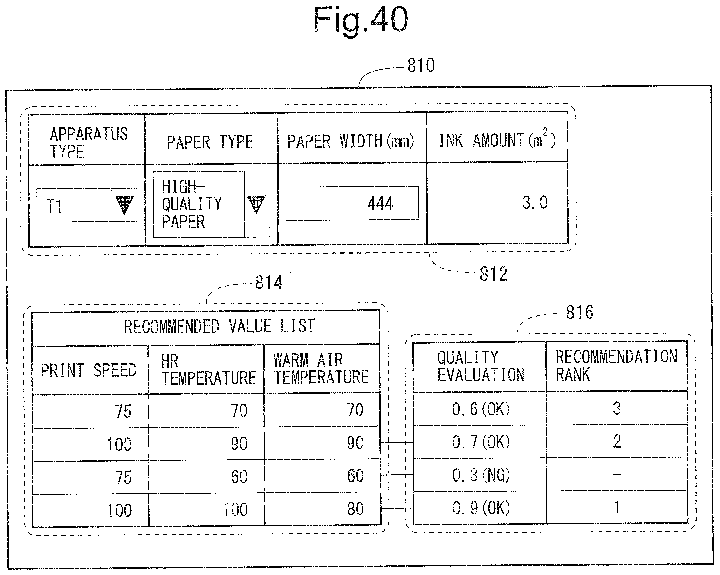

After the output targets as the recommended values (recommended objective variable value set) are determined in step S640 of Fig. 30 as described above, in step S70 of Fig. 14, for example, a recommended value information display screen 810 as shown in Fig. 40 is displayed on the display unit 523 of the print control device 110 as the computer 500. The recommended value information display screen 810 includes an explanatory variable value input area 812, a recommended value list output area 814, and an evaluation result output area 816. In the explanatory variable value input area 812, an explanatory variable value set corresponding to the input printing condition is displayed. In the recommended value list output area 814, a plurality of objective variable value sets determined to be the output targets as recommended objective variable value sets in the recommended candidate value search processing are displayed. In the evaluation result output area 816, the evaluation value (the output value z from the neural network 80) and the recommendation rank are displayed for each of the plurality of objective variable value sets determined to be the output targets. In the example shown in Fig. 40, for the objective variable value set for which the output value z greater than or equal to the threshold has been obtained, a character "(OK)" is added after the evaluation value, and for the objective variable value set for which the output value z less than the threshold has been obtained, a character "(NG)" is added after the evaluation value. The recommendation rank is not displayed for the objective variable value set for which the output value z less than the threshold has been obtained.

As above, in the present modification, the neural network 80 learned using the print result log 6 with the quality label as the teacher data is used to evaluate each of the plurality of recommended candidate objective variable value sets obtained in the recommended candidate value search processing. Then, output targets as recommended values (recommended objective variable value set) are determined on the basis of the evaluation result.

### <9. Others>

Although the configuration of the inkjet printing apparatus that performs color printing has been exemplified in the above embodiment, the present invention can also be applied to a case where an inkjet printing apparatus that performs monochrome printing is adopted. Furthermore, the print medium is not limited to paper, but may be a resin such as plastic, and the present invention can be applied not only to an opaque print medium but also to a transparent print medium. In addition, a configuration not including the recommended candidate value evaluation unit 1161 can also be adopted, although the accuracy decreases in terms of presenting appropriate parameter values as recommended values. In this case, the processing (recommended candidate value evaluation processing) in step S60 of Figs. 14 and 37 is not performed, and a plurality of objective variable value sets obtained by the recommended candidate value search model 61 are presented as the plurality of recommended value sets as they are.

## Claims

1. A printing system that includes a printing apparatus (10) provided with a conveyance mechanism (129) configured to convey a print medium, a conveyance controller (111) configured to control a conveyance speed at which the conveyance mechanism (129) conveys the print medium, a printing unit (124) configured to perform printing by ejecting ink onto the print medium being conveyed by the conveyance mechanism (129), a drying mechanism (125) configured to dry the print medium after printing by the printing unit (124), and a drying controller (113) configured to control a drying temperature at which the drying mechanism (125) dries the print medium, the printing system comprising:
a printing condition input reception unit (115) configured to receive an input of a printing condition; and
a recommended value output unit (116) configured to output a plurality of recommended values for at least one of a conveyance speed and a drying temperature as a print parameter on a basis of an input printing condition that is a printing condition received by the printing condition input reception unit (115),
wherein the recommended value output unit (116) includes
a recommended candidate value search model (61) learned by machine learning, the recommended candidate value search model being configured to obtain a plurality of recommended candidate values that are candidates for the plurality of recommended values on a basis of the input printing condition, and
a recommended candidate value evaluation unit (1161) configured to select output targets as the plurality of recommended values from the plurality of recommended candidate values by evaluating each of the plurality of recommended candidate values,
**characterized in that** the recommended candidate value search model (61) includes aggregated print result data including information on an appearance frequency for each combination of an explanatory variable value set and an objective variable value set, the explanatory variable value set being a combination of a plurality of explanatory variable values, the plurality of explanatory variable values each being a value obtained on a basis of a value of a condition item that is an item related to a printing condition or being the value of the condition item, the objective variable value set being a value of one print parameter or a combination of values of a plurality of print parameters, and
the recommended value output unit (116) outputs a plurality of recommended objective variable value sets including the plurality of recommended values on a basis of the aggregated print result data.

2. The printing system according to claim 1, wherein the recommended value output unit (116) further outputs a recommendation degree for each of the plurality of recommended values.

3. The printing system according to claim 1, wherein the recommended value output unit (116) further outputs a recommendation degree for each of the plurality of recommended objective variable value sets.

4. The printing system according to claim 1, wherein
the printing apparatus (10) further includes a first drying mechanism (401) and a second drying mechanism (402) as the drying mechanism (125), and
each of the plurality of recommended objective variable value sets includes a recommended value of a first drying temperature at which the first drying mechanism (401) dries the print medium and a recommended value of a second drying temperature at which the second drying mechanism (402) dries the print medium.

5. The printing system according to claim 1, wherein
the recommended candidate value search model (61) obtains a plurality of recommended candidate objective variable value sets that are candidates for the plurality of recommended objective variable value sets on a basis of the input printing condition and the aggregated print result data, and
the recommended candidate value evaluation unit (1161) selects output targets as the plurality of recommended objective variable value sets from the plurality of recommended candidate objective variable value sets by evaluating each of the plurality of recommended candidate objective variable value sets.

6. The printing system according to claim 5, wherein the recommended candidate value search model (61)
selects an explanatory variable value set similar to an explanatory variable value set corresponding to the input printing condition as a similar explanatory variable value set, and
obtains the plurality of recommended candidate objective variable value sets in consideration of an appearance frequency of a combination of the similar explanatory variable value set and each objective variable value set.

7. The printing system according to claim 5, wherein the recommended candidate value evaluation unit (1161) determines whether a value of a print parameter included in each of the plurality of recommended candidate objective variable value sets satisfies a predetermined threshold condition, and excludes a recommended candidate objective variable value set including a value of a print parameter that does not satisfy the predetermined threshold condition from selection targets as the output targets.

8. The printing system according to claim 5, wherein the recommended candidate value evaluation unit (1161) calculates a recommendation degree for each of the plurality of recommended candidate objective variable value sets on a basis of the aggregated print result data, and excludes a recommended candidate objective variable value set excluding top K recommended candidate objective variable value sets for each of which a high recommendation degree is obtained, where K is an integer, from selection targets as the output targets.

9. The printing system according to claim 5, wherein the recommended candidate value evaluation unit (1161)
includes a print quality determination model (80) learned by machine learning, the print quality determination model being configured to output quality data representing print quality on a basis of a combination of the explanatory variable value set and the objective variable value set,
determines whether print quality for each of the plurality of recommended candidate objective variable value sets is high or low on a basis of the quality data outputted by inputting a combination of an explanatory variable value set corresponding to the input printing condition and each of the plurality of recommended candidate objective variable value sets to the print quality determination model (80), and
excludes a recommended candidate objective variable value set for which print quality is determined to be low from selection targets as the output targets.

10. The printing system according to claim 1, wherein the explanatory variable value set includes a value related to the print medium and a value representing an amount of ink ejected by the printing unit (124).

11. The printing system according to any one of claims 1 to 10, wherein
the printing apparatus (10) further includes a log output unit configured to output, after completion of printing, a print result log including a value of a condition item that is a source of the explanatory variable value set and a value of a print parameter that is a source of the objective variable value set, and
the aggregated print result data is generated by using a combination of the explanatory variable value set and the objective variable value set as teacher data on a basis of the print result log.

12. The printing system according to claim 11, comprising a plurality of the printing apparatuses (10) and a management server (20),
wherein the print result log is transmitted from the plurality of printing apparatuses (10) to the management server (20),
the management server (20) includes a model construction unit (220) configured to construct the recommended candidate value search model (61) on a basis of the print result log transmitted from each of the plurality of printing apparatuses (10),
the recommended candidate value search model (61) constructed by the model construction unit (220) is transmitted from the management server (20) to the plurality of printing apparatuses (10), and
each of the plurality of printing apparatuses (10) includes the printing condition input reception unit (115), and the recommended value output unit (116) including the recommended candidate value search model (61) transmitted from the management server (20).

13. An adjustment supporting method for supporting adjustment of a value of a print parameter in a printing apparatus (10) provided with a conveyance mechanism (129) configured to convey a print medium, a conveyance controller (111) configured to control a conveyance speed at which the conveyance mechanism (129) conveys the print medium, a printing unit (124) configured to perform printing by ejecting ink onto the print medium being conveyed by the conveyance mechanism (129), a drying mechanism (125) configured to dry the print medium after printing by the printing unit (124), and a drying controller (113) configured to control a drying temperature at which the drying mechanism (125) dries the print medium, the adjustment supporting method comprising:
a printing condition input step (S40) of inputting, by an operator, a printing condition; and
a recommended value output step (S50, S60, and S70) of outputting, by a computer, a plurality of recommended values for at least one of a conveyance speed and a drying temperature as a print parameter on a basis of an input printing condition that is a printing condition inputted in the printing condition input step (S40),
wherein the recommended value output step (S50, S60, and S70) includes
a recommended candidate value search step (S50) of obtaining a plurality of recommended candidate values that are candidates for the plurality of recommended values on a basis of the input printing condition, using a recommended candidate value search model learned by machine learning, and
a recommended candidate value evaluation step (S60) of selecting output targets as the plurality of recommended values from the plurality of recommended candidate values by evaluating each of the plurality of recommended candidate values, **characterized in that**
in the recommended candidate value search step (S50) print result data including information on an appearance frequency for each combination of an explanatory variable value set and an objective variable value set is aggregated, the explanatory variable value set being a combination of a plurality of explanatory variable values, the plurality of explanatory variable values each being a value obtained on a basis of a value of a condition item that is an item related to a printing condition or being the value of the condition item, the objective variable value set being a value of one print parameter or a combination of values of a plurality of print parameters, and
in the recommended value output step (S50, S60, S70), a plurality of recommended objective variable value sets including the plurality of recommended values are output on a basis of the aggregated print result data.

14. An adjustment supporting program for supporting adjustment of a value of a print parameter in a printing apparatus (10) provided with a conveyance mechanism (129) configured to convey a print medium, a conveyance controller (111) configured to control a conveyance speed at which the conveyance mechanism (129) conveys the print medium, a printing unit (124) configured to perform printing by ejecting ink onto the print medium being conveyed by the conveyance mechanism (129), a drying mechanism (125) configured to dry the print medium after printing by the printing unit (124), and a drying controller (113) configured to control a drying temperature at which the drying mechanism (125) dries the print medium, wherein the adjustment supporting program causes a computer included in the printing apparatus (10) to execute:
a printing condition input reception step (S40) of receiving an input of a printing condition; and
a recommended value output step (S50, S60, and S70) of outputting a plurality of recommended values for at least one of a conveyance speed and a drying temperature as a print parameter on a basis of an input printing condition that is a printing condition received in the printing condition input reception step,
wherein the recommended value output step (S50, S60, and S70) includes
a recommended candidate value search step (S50) of obtaining a plurality of recommended candidate values that are candidates for the plurality of recommended values on a basis of the input printing condition, using a recommended candidate value search model learned by machine learning, and
a recommended candidate value evaluation step (S60) of selecting output targets as the plurality of recommended values from the plurality of recommended candidate values by evaluating each of the plurality of recommended candidate values, **characterized in that**
in the recommended candidate value search step (S50) print result data including information on an appearance frequency for each combination of an explanatory variable value set and an objective variable value set is aggregated, the explanatory variable value set being a combination of a plurality of explanatory variable values, the plurality of explanatory variable values each being a value obtained on a basis of a value of a condition item that is an item related to a printing condition or being the value of the condition item, the objective variable value set being a value of one print parameter or a combination of values of a plurality of print parameters, and
in the recommended value output step (S50, S60, S70), a plurality of recommended objective variable value sets including the plurality of recommended values are output on a basis of the aggregated print result data.

## Patentansprüche

1. Drucksystem, das eine Druckvorrichtung (10) umfasst, die mit einem Fördermechanismus (129) versehen ist, der eingerichtet ist, ein Druckmedium zu fördern, einer Fördersteuerung (111), die eingerichtet ist, eine Fördergeschwindigkeit zu steuern, mit der der Fördermechanismus (129) das Druckmedium fördert, einer Druckeinheit (124), die eingerichtet ist, einen Druck durch Ausstoßen von Tinte auf das durch den Fördermechanismus (129) geförderte Druckmedium durchzuführen, einem Trocknungsmechanismus (125), der eingerichtet ist, das Druckmedium nach dem Drucken durch die Druckeinheit (124) zu trocknen, und einer Trocknungssteuerung (113), die eingerichtet ist, eine Trocknungstemperatur zu steuern, mit der der Trocknungsmechanismus (125) das Druckmedium trocknet, wobei das Drucksystem umfasst:
eine Druckbedingungseingabeempfangseinheit (115), die eingerichtet ist, eine Eingabe einer Druckbedingung zu empfangen; und
eine Empfehlungswertausgabeeinheit (116), die eingerichtet ist, eine Vielzahl von Empfehlungswerten für mindestens eine von einer Fördergeschwindigkeit und einer Trocknungstemperatur als Druckparameter auf Grundlage einer Eingabedruckbedingung auszugeben, die eine von der Druckbedingungseingabeempfangseinheit (115) empfangene Druckbedingung ist,
wobei die Empfehlungswertausgabeeinheit (116) umfasst
ein Empfehlungskandidatenwertsuchmodell (61), das durch maschinelles Lernen gelernt worden ist, wobei das Empfehlungskandidatenwertsuchmodell eingerichtet ist, eine Vielzahl von Empfehlungskandidatenwerten zu erhalten, die Kandidaten für die Vielzahl von Empfehlungswerten auf Grundlage der Eingabedruckbedingung sind; und
eine Empfehlungskandidatenwertbewertungseinheit (1161), die eingerichtet ist, Ausgabeziele als die Vielzahl von Empfehlungswerten aus der Vielzahl von Empfehlungskandidatenwerten auszuwählen, indem jeder der Vielzahl von Empfehlungskandidatenwerten bewertet wird,
**dadurch gekennzeichnet, dass** das Empfehlungskandidatenwertsuchmodell (61) aggregierte Druckergebnisdaten umfasst, die Informationen über eine Auftretenshäufigkeit für jede Kombination eines Erklärungsvariablenwertsatzes und eines Zielvariablenwertsatzes enthalten, wobei der Erklärungsvariablenwertsatz eine Kombination einer Vielzahl von Erklärungsvariablenwerten ist, wobei jeder der Vielzahl von Erklärungsvariablenwerten ein auf Grundlage eines Werts eines Bedingungselements, das ein Element in Bezug auf eine Druckbedingung ist, erhaltener Wert oder der Wert des Bedingungselements ist, wobei der Zielvariablenwertsatz ein Wert eines Druckparameters oder eine Kombination von Werten einer Vielzahl von Druckparametern ist, und
die Empfehlungswertausgabeeinheit (116) eine Vielzahl von empfohlenen Zielvariablenwertsätzen, die die Vielzahl von Empfehlungswerten umfassen, auf Grundlage der aggregierten Druckergebnisdaten ausgibt.

2. Drucksystem nach Anspruch 1, wobei die Empfehlungswertausgabeeinheit (116) ferner einen Empfehlungsgrad für jeden der Vielzahl von Empfehlungswerten ausgibt.

3. Drucksystem nach Anspruch 1, wobei die Empfehlungswertausgabeeinheit (116) ferner einen Empfehlungsgrad für jeden der Vielzahl von empfohlenen Zielvariablenwertsätzen ausgibt.

4. Drucksystem nach Anspruch 1, wobei
die Druckvorrichtung (10) ferner einen ersten Trocknungsmechanismus (401) und einen zweiten Trocknungsmechanismus (402) als den Trocknungsmechanismus (125) umfasst, und
jeder der Vielzahl von empfohlenen Zielvariablenwertsätzen einen Empfehlungswert einer ersten Trocknungstemperatur, mit der der erste Trocknungsmechanismus (401) das Druckmedium trocknet, und einen Empfehlungswert einer zweiten Trocknungstemperatur, mit der der zweite Trocknungsmechanismus (402) das Druckmedium trocknet, umfasst.

5. Drucksystem nach Anspruch 1, wobei
das Empfehlungskandidatenwertsuchmodell (61) eine Vielzahl von empfohlenen Kandidatenzielvariablenwertsätzen, die Kandidaten für die Vielzahl von empfohlenen Zielvariablenwertsätzen sind, auf Grundlage der Eingabedruckbedingung und der aggregierten Druckergebnisdaten erhält, und
die Empfehlungskandidatenwertbewertungseinheit (1161) Ausgabeziele als die Vielzahl von empfohlenen Zielvariablenwertsätzen aus der Vielzahl von empfohlenen Kandidatenzielvariablenwertsätzen auswählt, indem jeder der Vielzahl von empfohlenen Kandidatensätzen von Zielvariablenwerten bewertet wird.

6. Drucksystem nach Anspruch 5, wobei das Empfehlungskandidatenwertsuchmodell (61)
einen Erklärungsvariablenwertsatz, der einem Erklärungsvariablenwertsatz entspricht, der der Eingabedruckbedingung entspricht, als einen ähnlichen Erklärungsvariablenwertsatz auswählt, und
die Vielzahl von empfohlenen Kandidatenzielvariablenwertsätzen unter Berücksichtigung einer Auftretenshäufigkeit einer Kombination des ähnlichen Erklärungsvariablenwertsatzes und jedes der Zielvariablenwertsätze erhält.

7. Drucksystem nach Anspruch 5, wobei die Empfehlungskandidatenwertbewertungseinheit (1161) bestimmt, ob ein Wert eines Druckparameters, der in jedem der Vielzahl von empfohlenen Kandidatenzielvariablenwertsätzen enthalten ist, eine vorbestimmte Schwellenwertbedingung erfüllt, und einen empfohlenen Kandidatenzielvariablenwertsatz, der einen Wert eines Druckparameters enthält, der die vorbestimmte Schwellenwertbedingung nicht erfüllt, von Auswahlzielen als die Ausgabeziele ausschließt.

8. Drucksystem nach Anspruch 5, wobei die Empfehlungskandidatenwertbewertungseinheit (1161) einen Empfehlungsgrad für jeden der Vielzahl von empfohlenen Kandidatenzielvariablenwertsätzen auf Grundlage der aggregierten Druckergebnisdaten berechnet und einen empfohlenen Kandidatenzielvariablenwertsatz aus den Auswahlzielen als Ausgabeziele ausschließt, mit Ausnahme der obersten K empfohlenen Kandidatenzielvariablenwertsätze, von denen jeweils ein hoher Empfehlungsgrad erhalten wird, wobei K eine ganze Zahl ist.

9. Drucksystem nach Anspruch 5, wobei die Empfehlungskandidatenwertbewertungseinheit (1161)
ein durch maschinelles Lernen gelerntes Druckqualitätsbestimmungsmodell (80) umfasst, wobei das Druckqualitätsbestimmungsmodell eingerichtet ist, Qualitätsdaten auszugeben, die eine Druckqualität auf Grundlage einer Kombination des Erklärungsvariablenwertsatzes und des Zielvariablenwertsatzes darstellen,
bestimmt, ob die Druckqualität für jeden der Vielzahl von empfohlenen Kandidatenzielvariablenwertsätzen hoch oder niedrig ist, auf Grundlage der Qualitätsdaten, die ausgegeben werden, indem eine Kombination eines dem Eingabedruckbedingung entsprechenden Erklärungsvariablenwertsatzes und jedes der Vielzahl von empfohlenen Kandidatenzielvariablenwertsätze in das Druckqualitätsbestimmungsmodell (80) eingegeben wird, und
einen empfohlenen Kandidatenzielvariablenwertsatz, für den die Druckqualität als niedrig bestimmt wird, von den Auswahlzielen als Ausgabeziele ausschließt.

10. Drucksystem nach Anspruch 1, wobei der Erklärungsvariablenwertsatz einen Wert in Bezug auf das Druckmedium und einen Wert umfasst, der eine von der Druckeinheit (124) ausgestoßene Tintenmenge darstellt.

11. Drucksystem nach einem der Ansprüche 1 bis 10, wobei
die Druckvorrichtung (10) ferner eine Protokollausgabeeinheit umfasst, die eingerichtet ist, nach Abschluss des Druckens ein Druckergebnisprotokoll auszugeben, das einen Wert eines Bedingungselements, das eine Quelle des Erklärungsvariablenwertsatzes ist, und einen Wert eines Druckparameters, der eine Quelle des Zielvariablenwertsatzes ist, umfasst, und
die aggregierten Druckergebnisdaten unter Verwendung einer Kombination des Erklärungsvariablenwertsatzes und des Zielvariablenwertsatzes als Trainingsdaten auf Grundlage des Druckergebnisprotokolls erzeugt werden.

12. Drucksystem nach Anspruch 11, umfassend eine Vielzahl von Druckvorrichtungen (10) und einen Verwaltungsserver (20),
wobei das Druckergebnisprotokoll von der Vielzahl von Druckvorrichtungen (10) an den Verwaltungsserver (20) übertragen wird,
wobei der Verwaltungsserver (20) eine Modellerstellungseinheit (220) umfasst, die eingerichtet ist, das Empfehlungskandidatenwertsuchmodell (61) auf Grundlage des von jeder der Vielzahl von Druckvorrichtungen (10) übertragenen Druckergebnisprotokolls zu erstellen,
das durch die Modellerstellungseinheit (220) erstellte Empfehlungskandidatenwertsuchmodell (61) von dem Verwaltungsserver (20) an die Vielzahl von Druckvorrichtungen (10) übertragen wird, und
jede der Vielzahl von Druckvorrichtungen (10) die Druckbedingungseingabeempfangseinheit (115) und die Empfehlungswertausgabeeinheit (116) umfasst, die das vom Verwaltungsserver (20) übertragene Empfehlungskandidatenwertsuchmodell (61) umfasst.

13. Anpassungsunterstützungsverfahren zum Unterstützen des Einstellens eines Werts eines Druckparameters in einer Druckvorrichtung (10), die mit einem Fördermechanismus (129) versehen ist, der eingerichtet ist, ein Druckmedium zu fördern, einer Fördersteuerung (111), die eingerichtet ist, eine Fördergeschwindigkeit zu steuern, mit der der Fördermechanismus (129) das Druckmedium fördert, einer Druckeinheit (124), die eingerichtet ist, einen Druck durch Ausstoßen von Tinte auf das durch den Fördermechanismus (129) geförderte Druckmedium auszuführen, einem Trocknungsmechanismus (125), der eingerichtet ist, das Druckmedium nach dem Drucken durch die Druckeinheit (124) zu trocknen, und einer Trocknungssteuerung (113), die eingerichtet ist, eine Trocknungstemperatur zu steuern, mit der der Trocknungsmechanismus (125) das Druckmedium trocknet, wobei das Anpassungsunterstützungsverfahren umfasst:
einen Druckbedingungseingabeschritt (S40) des Eingebens einer Druckbedingung durch einen Bediener; und
eine Empfehlungswertausgabeschritt (S50, S60 und S70) des Ausgebens, durch einen Computer, einer Vielzahl von Empfehlungswerten für mindestens eine von einer Fördergeschwindigkeit und einer Trocknungstemperatur als Druckparameter auf Grundlage einer Eingabedruckbedingung, die eine im Druckbedingungseingabeschritt (S40) eingegebene Druckbedingung ist,
wobei der Empfehlungswertausgabeschritt (S50, S60 und S70) umfasst:
einen Empfehlungskandidatenwertsuchschritt (S50) des Ermittelns einer Vielzahl von Empfehlungskandidatenwerten, die Kandidaten für die Vielzahl von Empfehlungswerten sind, auf Grundlage der Eingabedruckbedingung unter Verwendung eines durch maschinelles Lernen gelernten Empfehlungskandidatenwertsuchmodells, und
einen Empfehlungskandidatenwertbewertungsschritt (S60) des Auswählens von Ausgabezielen als die Vielzahl von Empfehlungswerten aus der Vielzahl von Empfehlungskandidatenwerten durch Bewerten jedes der Vielzahl von Empfehlungskandidatenwerten, **dadurch gekennzeichnet, dass**
in dem Empfehlungskandidatenwertsuchschritt (S50) Druckergebnisdaten, die Informationen über eine Auftretenshäufigkeit für jede Kombination eines Erklärungsvariablenwertsatzes und eines Zielvariablenwertsatzes enthalten, aggregiert werden, wobei der Erklärungsvariablenwertsatz eine Kombination einer Vielzahl von Erklärungsvariablenwerten ist, wobei jeder der Vielzahl von Erklärungsvariablenwerte ein auf Grundlage eines Werts eines Bedingungselements, das ein mit einer Druckbedingung in Zusammenhang stehendes Element ist, erhaltener Wert oder der Wert des Bedingungselements ist, wobei der Zielvariablenwertsatz ein Wert eines Druckparameters oder eine Kombination von Werten einer Vielzahl von Druckparametern ist, und
in dem Empfehlungswertausgabeschritt (S50, S60 und S70) eine Vielzahl von empfohlenen Zielvariablenwertsätzen einschließlich der Vielzahl von Empfehlungswerten auf Grundlage der aggregierten Druckergebnisdaten ausgegeben werden.

14. Anpassungsunterstützungsprogramm zum Unterstützen des Einstellens eines Werts eines Druckparameters in einer Druckvorrichtung (10), die mit einem Fördermechanismus (129) versehen ist, der eingerichtet ist, ein Druckmedium zu fördern, einer Fördersteuerung (111), die eingerichtet ist, eine Fördergeschwindigkeit zu steuern, mit der der Fördermechanismus (129) das Druckmedium fördert, einer Druckeinheit (124), die eingerichtet ist, einen Druck durch Ausstoßen von Tinte auf das durch den Fördermechanismus (129) geförderte Druckmedium auszuführen, einem Trocknungsmechanismus (125), der eingerichtet ist, das Druckmedium nach dem Drucken durch die Druckeinheit (124) zu trocknen, und einer Trocknungssteuerung (113), die eingerichtet ist, eine Trocknungstemperatur zu steuern, mit der der Trocknungsmechanismus (125) das Druckmedium trocknet, wobei das Programm einen in der Druckvorrichtung (10) enthaltenen Computer veranlasst, auszuführen:
einen Druckbedingungseingabeempfangsschritt (S40) des Empfangens einer Eingabe einer Druckbedingung; und
einen Empfehlungswertausgabeschritt (S50, S60 und S70) des Ausgebens einer Vielzahl von Empfehlungswerten für mindestens eine von einer Fördergeschwindigkeit und einer Trocknungstemperatur als Druckparameter auf Grundlage einer im Druckbedingungseingabeempfangsschritt empfangenen Druckbedingung,
wobei der Empfehlungswertausgabeschritt (S50, S60 und S70) umfasst:
einen Empfehlungskandidatenwertsuchschritt (S50) des Ermittelns einer Vielzahl von Empfehlungskandidatenwerten, die Kandidaten für die Vielzahl von Empfehlungswerten sind, auf Grundlage der Eingabedruckbedingung unter Verwendung eines durch maschinelles Lernen gelernten Empfehlungskandidatenwertsuchmodells, und
einen Empfehlungskandidatenwertbewertungsschritt (S60) des Auswählens von Ausgabezielen als die Vielzahl von Empfehlungswerten aus der Vielzahl von Empfehlungskandidatenwerten durch Bewerten jedes der Vielzahl von Empfehlungskandidatenwerten, **dadurch gekennzeichnet, dass**
in dem Empfehlungskandidatenwertsuchschritt (S50) Druckergebnisdaten, die Informationen über eine Auftretenshäufigkeit für jede Kombination eines Erklärungsvariablenwertsatzes und eines Zielvariablenwertsatzes enthalten, aggregiert werden, wobei der Erklärungsvariablenwertsatz eine Kombination einer Vielzahl von Erklärungsvariablenwerten ist, wobei jeder der Vielzahl von Erklärungsvariablenwerte ein auf Grundlage eines Werts eines Bedingungselements, das ein mit einer Druckbedingung in Zusammenhang stehendes Element ist, erhaltener Wert oder der Wert des Bedingungselements ist, wobei der Zielvariablenwertsatz ein Wert eines Druckparameters oder eine Kombination von Werten einer Vielzahl von Druckparametern ist, und
in dem Empfehlungswertausgabeschritt (S50, S60 und S70) eine Vielzahl von empfohlenen Zielvariablenwertsätzen einschließlich der Vielzahl von Empfehlungswerten auf Grundlage der aggregierten Druckergebnisdaten ausgegeben werden.

## Revendications

1. Système d'impression comprenant un appareil d'impression (10) pourvu d'un mécanisme de transport (129) configuré pour transporter un support d'impression, d'un dispositif de commande de transport (111) configuré pour commander la vitesse de transport à laquelle le mécanisme de transport (129) transporte le support d'impression, d'une unité d'impression (124) configurée pour effectuer l'impression en éjectant de l'encre sur le support d'impression qui est transporté par le mécanisme de transport (129), d'un mécanisme de séchage (125) configuré pour sécher le support d'impression après l'impression par l'unité d'impression (124), et d'un dispositif de commande de séchage (113) configuré pour commander la température de séchage à laquelle le mécanisme de séchage (125) sèche le support d'impression, le système d'impression comprenant :
une unité de réception d'entrée de condition d'impression (115) configurée pour recevoir une entrée d'une condition d'impression ; et
une unité de sortie de valeurs recommandées (116) configurée pour délivrer en sortie une pluralité de valeurs recommandées pour au moins l'une parmi une vitesse de transport et une température de séchage en tant que paramètre d'impression, sur la base d'une condition d'impression entrée qui est une condition d'impression reçue par l'unité de réception d'entrée de condition d'impression (115),
dans lequel l'unité de sortie de valeurs recommandées (116) comprend
un modèle de recherche de valeurs candidates recommandées (61) appris par apprentissage automatique, le modèle de recherche de valeurs candidates recommandées étant configuré pour obtenir une pluralité de valeurs candidates recommandées qui sont des candidates pour la pluralité de valeurs recommandées sur la base de la condition d'impression entrée, et
une unité d'évaluation de valeurs candidates recommandées (1161) configurée pour sélectionner des cibles de sortie en tant que pluralité de valeurs recommandées parmi la pluralité de valeurs candidates recommandées en évaluant chacune de la pluralité de valeurs candidates recommandées,
**caractérisé en ce que** le modèle de recherche de valeurs candidates recommandées (61) comprend des données de résultats d'impression agrégées comprenant des informations sur une fréquence d'apparition pour chaque combinaison d'un ensemble de valeurs de variables explicatives et d'un ensemble de valeurs de variables objectives, l'ensemble de valeurs de variables explicatives étant une combinaison d'une pluralité de valeurs de variables explicatives, chacune de la pluralité de valeurs de variables explicatives étant une valeur obtenue sur la base d'une valeur d'un élément de condition qui est un élément lié à une condition d'impression ou étant la valeur de l'élément de condition, l'ensemble de valeurs de variables objectives étant une valeur d'un paramètre d'impression ou une combinaison de valeurs d'une pluralité de paramètres d'impression, et
l'unité de sortie de valeurs recommandées (116) délivre en sortie une pluralité d'ensembles de valeurs de variables objectives recommandées comprenant la pluralité de valeurs recommandées sur la base des données de résultats d'impression agrégées.

2. Système d'impression selon la revendication 1, dans lequel l'unité de sortie de valeurs recommandées (116) délivre en outre en sortie un degré de recommandation pour chacune de la pluralité de valeurs recommandées.

3. Système d'impression selon la revendication 1, dans lequel l'unité de sortie de valeurs recommandées (116) délivre en outre en sortie un degré de recommandation pour chacun de la pluralité d'ensembles de valeurs de variables objectives recommandées.

4. Système d'impression selon la revendication 1, dans lequel
l'appareil d'impression (10) comprend en outre un premier mécanisme de séchage (401) et un second mécanisme de séchage (402) en tant que mécanisme de séchage (125), et
chacun de la pluralité d'ensembles de valeurs de variables objectives recommandées comprend une valeur recommandée d'une première température de séchage à laquelle le premier mécanisme de séchage (401) sèche le support d'impression et une valeur recommandée d'une seconde température de séchage à laquelle le second mécanisme de séchage (402) sèche le support d'impression.

5. Système d'impression selon la revendication 1, dans lequel
le modèle de recherche de valeurs candidates recommandées (61) obtient une pluralité d'ensembles de valeurs de variables objectives candidates recommandées qui sont des candidats pour la pluralité d'ensembles de valeurs de variables objectives recommandées, sur la base de la condition d'impression entrée et des données de résultats d'impression agrégées, et
l'unité d'évaluation de valeurs candidates recommandées (1161) sélectionne des cibles de sortie en tant que pluralité d'ensembles de valeurs de variables objectives recommandées parmi la pluralité d'ensembles de valeurs de variables objectives candidates recommandées, en évaluant chacun de la pluralité d'ensembles de valeurs de variables objectives candidates recommandées.

6. Système d'impression selon la revendication 5, dans lequel le modèle de recherche de valeurs candidates recommandées (61)
sélectionne un ensemble de valeurs de variables explicatives similaire à un ensemble de valeurs de variables explicatives correspondant à la condition d'impression entrée en tant qu'ensemble de valeurs de variables explicatives similaire, et
obtient la pluralité d'ensembles de valeurs de variables objectives candidates recommandées en tenant compte d'une fréquence d'apparition d'une combinaison de l'ensemble de valeurs de variables explicatives similaire et de chaque ensemble de valeurs de variables objectives.

7. Système d'impression selon la revendication 5, dans lequel l'unité d'évaluation de valeurs candidates recommandées (1161) détermine si une valeur d'un paramètre d'impression incluse dans chacun de la pluralité d'ensembles de valeurs de variables objectives candidates recommandées satisfait une condition de seuil prédéterminée, et exclut un ensemble de valeurs de variables objectives candidates recommandées, comprenant une valeur d'un paramètre d'impression qui ne satisfait pas la condition de seuil prédéterminée, des cibles de sélection en tant que cibles de sortie.

8. Système d'impression selon la revendication 5, dans lequel l'unité d'évaluation de valeurs candidates recommandées (1161) calcule un degré de recommandation pour chacun de la pluralité d'ensembles de valeurs de variables objectives candidates recommandées sur la base des données de résultats d'impression agrégées, et exclut un ensemble de valeurs de variables objectives candidates recommandées, à l'exception des K ensembles de valeurs de variables objectives candidates recommandées classés en tête pour chacun desquels un degré de recommandation élevé est obtenu, où K est un nombre entier, des cibles de sélection en tant que cibles de sortie.

9. Système d'impression selon la revendication 5, dans lequel l'unité d'évaluation de valeurs candidates recommandées (1161)
comprend un modèle de détermination de qualité d'impression (80) appris par apprentissage automatique, le modèle de détermination de qualité d'impression étant configuré pour délivrer en sortie des données de qualité représentant la qualité d'impression sur la base d'une combinaison de l'ensemble de valeurs de variables explicatives et de l'ensemble de valeurs de variables objectives,
détermine si la qualité d'impression pour chacun de la pluralité d'ensembles de valeurs de variables objectives candidates recommandées est élevée ou faible sur la base des données de qualité délivrées en sortie en entrant une combinaison d'un ensemble de valeurs de variables explicatives correspondant à la condition d'impression entrée et de chacun de la pluralité d'ensembles de valeurs de variables objectives candidates recommandées dans le modèle de détermination de qualité d'impression (80), et
exclut un ensemble de valeurs de variables objectives recommandées, pour lequel la qualité d'impression est déterminée comme étant faible, des cibles de sélection en tant que cibles de sortie.

10. Système d'impression selon la revendication 1, dans lequel l'ensemble de valeurs de variables explicatives comprend une valeur liée au support d'impression et une valeur représentant la quantité d'encre éjectée par l'unité d'impression (124).

11. Système d'impression selon l'une quelconque des revendications 1 à 10, dans lequel
l'appareil d'impression (10) comprend en outre une unité de sortie de journal configurée pour délivrer en sortie, une fois l'impression terminée, un journal de résultats d'impression comprenant une valeur d'un élément de condition qui est une source de l'ensemble de valeurs de variables explicatives et une valeur d'un paramètre d'impression qui est une source de l'ensemble de valeurs de variables objectives, et
les données de résultats d'impression agrégées sont générées en utilisant une combinaison de l'ensemble de valeurs de variables explicatives et de l'ensemble de valeurs de variables objectives comme données d'enseignement, sur la base du journal de résultats d'impression.

12. Système d'impression selon la revendication 11, comprenant une pluralité d'appareils d'impression (10) et un serveur de gestion (20),
dans lequel le journal de résultats d'impression est transmis depuis la pluralité d'appareils d'impression (10) vers le serveur de gestion (20),
le serveur de gestion (20) comprend une unité de construction de modèle (220) configurée pour construire le modèle de recherche de valeurs candidates recommandées (61) sur la base du journal de résultats d'impression transmis depuis chacun de la pluralité d'appareils d'impression (10),
le modèle de recherche de valeurs candidates recommandées (61) construit par l'unité de construction de modèle (220) est transmis depuis le serveur de gestion (20) vers la pluralité d'appareils d'impression (10), et
chacun de la pluralité d'appareils d'impression (10) comprend l'unité de réception d'entrée de condition d'impression (115) et l'unité de sortie de valeurs recommandées (116) comprenant le modèle de recherche de valeurs candidates recommandées (61) transmis depuis le serveur de gestion (20).

13. Procédé d'assistance au réglage pour assister le réglage d'une valeur d'un paramètre d'impression dans un appareil d'impression (10) pourvu d'un mécanisme de transport (129) configuré pour transporter un support d'impression, d'un dispositif de commande de transport (111) configuré pour commander la vitesse de transport à laquelle le mécanisme de transport (129) transporte le support d'impression, d'une unité d'impression (124) configurée pour effectuer l'impression en éjectant de l'encre sur le support d'impression qui est transporté par le mécanisme de transport (129), d'un mécanisme de séchage (125) configuré pour sécher le support d'impression après l'impression par l'unité d'impression (124), et d'un dispositif de commande de séchage (113) configuré pour commander la température de séchage à laquelle le mécanisme de séchage (125) sèche le support d'impression, le procédé d'assistance au réglage comprenant :
une étape d'entrée de condition d'impression (S40) consistant à entrer, par un opérateur, une condition d'impression ; et
une étape de sortie de valeurs recommandées (S50, S60 et S70) consistant à délivrer en sortie, par un ordinateur, une pluralité de valeurs recommandées pour au moins l'une parmi une vitesse de transport et une température de séchage en tant que paramètre d'impression, sur la base d'une condition d'impression entrée qui est une condition d'impression entrée lors de l'étape d'entrée de condition d'impression (S40),
dans lequel l'étape de sortie de valeurs recommandées (S50, S60 et S70) comprend
une étape de recherche de valeurs candidates recommandées (S50) consistant à obtenir une pluralité de valeurs candidates recommandées qui sont des candidates pour la pluralité de valeurs recommandées sur la base de la condition d'impression entrée, en utilisant un modèle de recherche de valeurs candidates recommandées appris par apprentissage automatique, et
une étape d'évaluation de valeurs candidates recommandées (S60) consistant à sélectionner des cibles de sortie en tant que pluralité de valeurs recommandées parmi la pluralité de valeurs candidates recommandées en évaluant chacune de la pluralité de valeurs candidates recommandées, **caractérisé en ce que**
lors de l'étape de recherche de valeurs candidates recommandées (S50), des données de résultats d'impression comprenant des informations sur une fréquence d'apparition pour chaque combinaison d'un ensemble de valeurs de variables explicatives et d'un ensemble de valeurs de variables objectives sont agrégées, l'ensemble de valeurs de variables explicatives étant une combinaison d'une pluralité de valeurs de variables explicatives, chacune de la pluralité de valeurs de variables explicatives étant une valeur obtenue sur la base d'une valeur d'un élément de condition qui est un élément lié à une condition d'impression ou étant la valeur de l'élément de condition, l'ensemble de valeurs de variables objectives étant une valeur d'un paramètre d'impression ou une combinaison de valeurs d'une pluralité de paramètres d'impression, et
lors de l'étape de sortie de valeurs recommandées (S50, S60, S70), une pluralité d'ensembles de valeurs de variables objectives recommandées comprenant la pluralité de valeurs recommandées sont délivrés en sortie sur la base des données de résultats d'impression agrégées.

14. Programme d'assistance au réglage pour assister le réglage d'une valeur d'un paramètre d'impression dans un appareil d'impression (10) pourvu d'un mécanisme de transport (129) configuré pour transporter un support d'impression, d'un dispositif de commande de transport (111) configuré pour commander la vitesse de transport à laquelle le mécanisme de transport (129) transporte le support d'impression, d'une unité d'impression (124) configurée pour effectuer l'impression en éjectant de l'encre sur le support d'impression qui est transporté par le mécanisme de transport (129), d'un mécanisme de séchage (125) configuré pour sécher le support d'impression après l'impression par l'unité d'impression (124), et d'un dispositif de commande de séchage (113) configuré pour commander la température de séchage à laquelle le mécanisme de séchage (125) sèche le support d'impression, dans lequel le programme d'assistance au réglage amène un ordinateur inclus dans l'appareil d'impression (10) à exécuter :
une étape de réception d'entrée de condition d'impression (S40) consistant à recevoir une entrée d'une condition d'impression ; et
une étape de sortie de valeurs recommandées (S50, S60 et S70) consistant à délivrer en sortie une pluralité de valeurs recommandées pour au moins l'une parmi une vitesse de transport et une température de séchage en tant que paramètre d'impression, sur la base d'une condition d'impression entrée qui est une condition d'impression reçue lors de l'étape de réception d'entrée de condition d'impression,
dans lequel l'étape de sortie de valeurs recommandées (S50, S60 et S70) comprend
une étape de recherche de valeurs candidates recommandées (S50) consistant à obtenir une pluralité de valeurs candidates recommandées qui sont des candidates pour la pluralité de valeurs recommandées sur la base de la condition d'impression entrée, en utilisant un modèle de recherche de valeurs candidates recommandées appris par apprentissage automatique, et
une étape d'évaluation de valeurs candidates recommandées (S60) consistant à sélectionner des cibles de sortie en tant que pluralité de valeurs recommandées parmi la pluralité de valeurs candidates recommandées en évaluant chacune de la pluralité de valeurs candidates recommandées, **caractérisé en ce que**
lors de l'étape de recherche de valeurs candidates recommandées (S50), des données de résultats d'impression comprenant des informations sur une fréquence d'apparition pour chaque combinaison d'un ensemble de valeurs de variables explicatives et d'un ensemble de valeurs de variables objectives sont agrégées, l'ensemble de valeurs de variables explicatives étant une combinaison d'une pluralité de valeurs de variables explicatives, chacune de la pluralité de valeurs de variables explicatives étant une valeur obtenue sur la base d'une valeur d'un élément de condition qui est un élément lié à une condition d'impression ou étant la valeur de l'élément de condition, l'ensemble de valeurs de variables objectives étant une valeur d'un paramètre d'impression ou une combinaison de valeurs d'une pluralité de paramètres d'impression, et
lors de l'étape de sortie de valeurs recommandées (S50, S60, S70), une pluralité d'ensembles de valeurs de variables objectives recommandées comprenant la pluralité de valeurs recommandées sont délivrés en sortie sur la base des données de résultats d'impression agrégées.
